(19) **Europäisches Patentamt**
**European Patent Office**
**Office européen des brevets**

(11) **EP 4 694 146 A1**

(12) **EUROPEAN PATENT APPLICATION**
published in accordance with Art. 153(4) EPC

(43) Date of publication:
**11.02.2026 Bulletin 2026/07**

(21) Application number: **24838473.7**

(22) Date of filing: **28.05.2024**

(51) International Patent Classification (IPC):
**H04N 21/43** (2011.01)

(52) Cooperative Patent Classification (CPC):
**H04N 21/43**

(86) International application number:
**PCT/CN2024/095705**

(87) International publication number:
**WO 2025/011215 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.07.2023 CN 202310838662**

(71) Applicant: **Huawei Technologies Co., Ltd.**
**Shenzhen, Guangdong 518129 (CN)**

(72) Inventors:
• **CAO, Hui**
  **Shenzhen, Guangdong 518129 (CN)**

• **REN, Guang**
  **Shenzhen, Guangdong 518129 (CN)**
• **PU, Hui**
  **Shenzhen, Guangdong 518129 (CN)**
• **LI, Gang**
  **Shenzhen, Guangdong 518129 (CN)**
• **ZHANG, Chuang**
  **Shenzhen, Guangdong 518129 (CN)**
• **DAI, Zhicheng**
  **Shenzhen, Guangdong 518129 (CN)**

(74) Representative: **Isarpatent**
**Patent- und Rechtsanwälte Partg mbB**
**Friedrichstraße 31**
**80801 München (DE)**

(54) **SYNCHRONOUS PLAYING SYSTEM AND METHOD, AND ELECTRONIC DEVICE, STORAGE MEDIUM AND CHIP SYSTEM**

(57)    This application provides a synchronous play system and method, an electronic device, a storage medium, and a chip system, and relates to the field of distributed hardware technologies, to implement audio-visual synchronization in a cross-device data casting application scenario. The method may be performed based on a device at a play end, and includes: receiving a first timestamp, where the first timestamp represents an actual play time of an $m^{th}$ first data frame on a first device, and m is greater than or equal to 1 and is an integer; reading a second timestamp corresponding to a to-be-played second data frame, where the second timestamp represents a play time sequence of each second data frame in a second data stream; calculating a first play time difference based on at least the first timestamp and the second timestamp; and determining, based on the first play time difference, a synchronous play strategy to be executed for the to-be-played second data frame.

FIG. 8

EP 4 694 146 A1

## Description

This application claims priority to Chinese Patent Application No. 202310838662.5, filed with the China National Intellectual Property Administration on July 7, 2023 and entitled "SYNCHRONOUS PLAY SYSTEM AND METHOD, ELECTRONIC DEVICE, STORAGE MEDIUM, AND CHIP SYSTEM", which is incorporated herein by reference in its entirety.

## TECHNICAL FIELD

This application relates to the field of distributed hardware technologies, and in particular, to a synchronous play system and method, an electronic device, a storage medium, and a chip system.

## BACKGROUND

A distributed operating system integrates capabilities of various types of different terminal devices to implement hardware collaboration and resource sharing, providing a user with smooth full-scenario experience. Based on distributed hardware, the distributed operating system may provide the user with various distributed services, for example, a distributed camera, a distributed screen, and distributed audio. Such distributed services usually include an audio/video transmission capability. For example, in an audio and video casting scenario, a source end encodes and compresses a raw audio/video stream, and sends the raw audio/video stream to a play end through a transmission module for decoding, restoration, and play.

In the audio and video casting scenario based on the distributed hardware, due to different sampling rates and post-processing duration of audio data and video data, network jitter, and another reason, asynchronous audio and video play may be caused during cross-device play, affecting user experience.

## SUMMARY

This application provides a synchronous play system and method, an electronic device, a storage medium, and a chip system, to implement synchronous audio-visual play in a distributed service scenario of cross-device casting.

According to a first aspect, an embodiment of this application provides a synchronous play system. The synchronous play system includes a first device, a second device, and a third device. The third device is configured to: transmit a first data stream to the first device for play, and transmit a second data stream to the second device for play. The first data stream and the second data stream are two data streams to be synchronously played. The first data stream includes a plurality of first data frames, and the second data stream includes a plurality of second data frames. The first device is configured to:

obtain a first timestamp, and send the first timestamp to the third device. The third device is configured to: receive the first timestamp, and forward the first timestamp to the second device. The second device is configured to: receive the first timestamp, read a second timestamp corresponding to a to-be-played second data frame, calculate a first play time difference based on at least the first timestamp and the second timestamp, and determine, based on the first play time difference, a synchronous play strategy to be executed for the to-be-played second data frame.

In a feasible implementation, when performing the operation of reading the second timestamp corresponding to the to-be-played second data frame, the second device is specifically configured to: at a predetermined time interval, fetch a next to-be-played second data frame from a cache queue, and read a second timestamp.

In a feasible implementation, when performing the operation of calculating the first play time difference based on at least the first timestamp and the second timestamp, the second device is specifically configured to: when it is determined that there is a mapping relationship between a next to-be-played second data frame and an $m^{th}$ first data frame, calculate the first play time difference based on at least a first timestamp corresponding to the $m^{th}$ first data frame and a second timestamp corresponding to the next to-be-played second data frame. The mapping relationship is determined based on a sequence number and/or a presentation timestamp PTS.

In a feasible implementation, the second device is further configured to: identify a data type of the to-be-played second data frame, and feed back the data type to the third device; the first device is further configured to: identify a data type of a to-be-played first data frame, and feed back the data type to the third device; and the third device is further configured to: receive the respective data type fed back by each of the first device and the second device, and determine a synchronization management strategy.

According to a second aspect, an embodiment of this application further provides a synchronous play system. The synchronous play system includes a first device, a second device, and a third device. The third device transmits a first data stream to the first device for play, and transmits a second data stream to the second device for play. The first data stream includes a plurality of first data frames, and the second data stream includes a plurality of second data frames. The first device is configured to determine delay information. The delay information includes a transmission delay and a decoding delay. The transmission delay represents duration for transmitting a first data frame from the third device to the first device. The decoding delay is decoding duration occupied for one first data frame. The third device is configured to: receive the delay information; obtain a sending time of the first data frame; obtain an estimated value of a play time of the first data frame on the first device based on at least the sending time and the delay information; and before sending a second data frame, add the estimated value as a fifth timestamp to the second data frame. The second device is configured to: read the fifth timestamp of the to-be-played second data frame; calculate a difference between the fifth timestamp and a current moment to obtain a second play time difference; and determine, based on the second play time difference, a synchronous play strategy to be executed for the to-be-played second data frame.

According to a third aspect, an embodiment of this application further provides a synchronous play system. The synchronous play system includes a fourth device, a fifth device, and a sixth device. The fourth device and the fifth device respectively transmit a fourth data stream and a fifth data stream to the sixth device for play. A control center is disposed in each of the fourth device, the fifth device, and the sixth device, and an interface is reserved in the control center to set synchronization group information. Each of the fourth device and the fifth device is configured to: set synchronization group information in a local control center, and send the synchronization group information that is set to the sixth device. The synchronization group information includes synchronization reference information and stream information. The synchronization reference information includes identity information of a device at a source end and identity information of a device at a play end. The stream information includes data type information of a data stream sent by each device at the source end. The sixth device is configured to: receive the synchronization group information sent by each of the fourth device and the fifth device, and determine a synchronous play strategy for a to-be-played data stream based on at least the synchronization group information.

According to a fourth aspect, a technical solution of this application provides a synchronous play method. The method is applied to a second device. The second device is configured to: receive a second data stream sent by a third device, and play the second data stream. The third device is further configured to transmit a first data stream to a first device for play. The first data stream and the second data stream are two data streams to be synchronously played. The first data stream includes a plurality of first data frames, and the second data stream includes a plurality of second data frames. The method includes: receiving a first timestamp, where the first timestamp represents an actual play time of an $m^{th}$ first data frame on the first device, and m is greater than or equal to 1 and is an integer; reading a second timestamp corresponding to a to-be-played second data frame, where the second timestamp represents a play time sequence of each second data frame in the second data stream; calculating a first play time difference based on at least the first timestamp and the second timestamp; and determining, based on the first play time difference, a synchronous play strategy to be executed for the to-be-played second data frame. In the method, an actual play time of each data frame in the first data stream is used as a reference to calculate a play time difference between the second data stream and the first data stream, and it may be determined, by using the play time difference, whether play progress of the second data stream is ahead of, behind, or synchronous with that of the first data stream, to adjust the play progress of the second data stream, so as to implement synchronous play.

In a feasible implementation, receiving the first timestamp includes: receiving the first timestamp forwarded by the third device. The first timestamp is generated by the first device and sent to the third device. The first timestamp is forwarded by the third device. Compared with another information transfer manner such as direct sending by the first device to the second device, this can reduce transmission pressure of a data link, and reduce a delay occupied in transferring key information, namely, the first timestamp.

In a feasible implementation, reading the second timestamp corresponding to the to-be-played second data frame includes: at a predetermined time interval, fetching a next to-be-played second data frame from a cache queue, and reading a second timestamp. A trigger condition for reading the second timestamp is triggered at the predetermined time interval. A reading frequency of reading the second timestamp may be controlled by setting and adjusting the time interval, to control a frequency of calculating the play time difference. A higher frequency is equivalent to determining whether synchronization is performed in a time at a finer granularity.

In a feasible implementation, calculating the first play time difference based on at least the first timestamp and the second timestamp includes: when it is determined that there is a mapping relationship between the next to-be-played second data frame and the $m^{th}$ first data frame, calculating the first play time difference based on at least the first timestamp corresponding to the $m^{th}$ first data frame and the second timestamp corresponding to the next to-be-played second data frame. The mapping relationship is determined based on a sequence number and/or a presentation timestamp PTS. The play time difference is calculated based on the first timestamp and the second timestamp. This may reflect a difference between the play progress of the first data stream and that of the second data stream to some extent.

In a feasible implementation, calculating the first play time difference based on at least the first timestamp and the second timestamp includes: calculating the first play time difference based on the first timestamp, the second timestamp, first processing duration, and second processing duration. The first processing duration is an estimated value of processing duration occupied from fetching one first data frame from the cache queue to playing the first data frame, and the second processing duration is an estimated value of processing duration occupied from fetching one second data frame from the cache queue to playing the second data frame. Further, two parameters, namely, the first processing duration and the second processing duration, are introduced to calculate the play time difference. This may more accurately reflect a difference between the play progress of the first data stream and that of the second data stream.

In a feasible implementation, the synchronous play strategy includes at least one of waiting, sending for display, and catching up. Determining, based on the first play time difference, the synchronous play strategy to be executed for the to-be-played second data frame includes: comparing the first play time difference with a predetermined first threshold interval; and when the first play time difference is less than a minimum value of the threshold interval, determining that play of the first data stream is behind that of the second data stream, and determining that the synchronous play strategy to be executed for the to-be-played second data frame is waiting; or when the first play time difference is greater than a maximum value of the threshold interval, determining that play of the first data stream is ahead of that of the second data stream, and determining that the synchronous play strategy to be executed for the to-be-played second data frame is catching up; or when the first play time difference is within the threshold interval, determining that play of the first data stream is synchronous with that of the second data stream, and determining that the synchronous play strategy to be executed for the to-be-played second data frame is sending for display.

In a feasible implementation, waiting includes one or more of reducing a play rate, waiting for first predetermined duration, and discarding a frame, where the first predetermined duration is determined based on a difference between the minimum value of the threshold interval and the first play time difference; and catching up includes increasing a play rate and/or discarding a frame.

According to a fifth aspect, an embodiment of this application further provides a synchronous play method. The method is applied to a third device. The third device is configured to: transmit a first data stream to a first device for play, and transmit a second data stream to a second device for play. The first data stream and the second data stream are two data streams to be synchronously played. The first data stream includes a plurality of first data frames, and the second data stream includes a plurality of second data frames. The method includes: receiving delay information, where the delay information includes a transmission delay and a decoding delay, the transmission delay represents duration for transmitting an $m^{th}$ first data frame from the third device to the first device, the decoding delay is decoding duration occupied for the $m^{th}$ first data frame, and m is greater than or equal to 1 and is an integer; obtaining a sending time of the $m^{th}$ first data frame; obtaining an estimated value of a play time of the $m^{th}$ first data frame on the first device based on at least the sending time and the delay information; and before sending a second data frame, adding the estimated value as a fifth timestamp to the second data frame, where the fifth timestamp is used to calculate a difference from a current moment to obtain a second play time difference, so as to determine a synchronous play strategy to be executed for the to-be-played second data frame. In the method, a play time of each data frame in the first data stream is estimated based on historical delay information of the first data stream, and the estimated value is used as a reference. The second device may determine a difference in play progress by comparing the estimated value with a current time, to implement synchronous play.

In a feasible implementation, obtaining the estimated value of the play time of the first data frame on the first device based on at least the sending time and the delay information includes: obtaining the estimated value of the play time of the $m^{th}$ first data frame on the first device based on at least the sending time of the $m^{th}$ first data frame and the delay information; and adding the estimated value as the fifth timestamp to the second data frame includes: adding the estimated value as the fifth timestamp to a second data frame that has a mapping relationship with the $m^{th}$ first data frame. The mapping relationship is determined based on a sequence number and/or a presentation timestamp PTS. For two data frames that have a mapping relationship, namely, two data frames that should be synchronously played, adding the fifth timestamp to the second data frame that has a mapping relationship with the $m^{th}$ first data frame is equivalent to marking the corresponding second data frame with the estimated play time of the $m^{th}$ first data frame. Before play, the second device only needs to compare a fifth timestamp in each second data frame with the current time, to determine a difference in play progress, so as to implement synchronous play.

In a feasible implementation, obtaining the estimated value of the play time of the first data frame on the first device based on at least the sending time and the delay information includes: obtaining the estimated value of the play time of the first data frame on the first device based on the sending time, the delay information, a third timestamp, and a fourth timestamp. The third timestamp is a presentation timestamp PTS added for the first data frame, and represents a play time sequence of each first data frame in the first data stream. The fourth timestamp is a presentation timestamp PTS added for the second data frame, and represents a play time sequence of each second data frame in the second data stream. In this manner, a feasible solution for calculating an estimated value of a play time is provided, and the calculated estimated value can accurately reflect a difference between play progress of the first data stream and that of the second data stream.

According to a sixth aspect, an embodiment of this application further provides a synchronous play method. The method is applied to a second device.

The second device is configured to: receive a second data stream sent by a third device, and play the second data stream. The third device is further configured to transmit a first data stream to a first device for play. The first data stream and the second data stream are two data streams to be synchronously played. The first data stream includes a plurality of first data frames, and the second data stream includes a plurality of second data frames. The method includes: reading a fifth timestamp corresponding to a to-be-played second data frame, where the fifth timestamp is an estimated value of a play time of a first data frame on the first device, and is obtained based on at least a sending time and delay information, the delay information includes a transmission delay and a decoding delay, the transmission delay represents duration for transmitting the first data frame from the third device to the first device, the decoding delay is decoding duration occupied for one first data frame, and the sending time is a time for sending the first data frame by the third device; calculating a difference between the fifth timestamp and a current moment to obtain a second play time difference; and determining, based on the second play time difference, a synchronous play strategy to be executed for the to-be-played second data frame.

In a feasible implementation, the synchronous play strategy includes at least one of waiting, sending for display, and catching up. Determining, based on the second play time difference, the synchronous play strategy to be executed for the to-be-played second data frame includes: comparing the second play time difference with a predetermined first threshold interval; and when the second play time difference is less than a minimum value of the threshold interval, determining that play of the first data stream is behind that of the second data stream, and determining that the synchronous play strategy to be executed for the to-be-played second data frame is waiting; or when the second play time difference is greater than a maximum value of the threshold interval, determining that play of the first data stream is ahead of that of the second data stream, and determining that the synchronous play strategy to be executed for the to-be-played second data frame is catching up; or when the second play time difference is within the threshold interval, determining that play of the first data stream is synchronous with that of the second data stream, and determining that the synchronous play strategy to be executed for the to-be-played second data frame is sending for display.

According to a seventh aspect, an embodiment of this application further provides a synchronous play method. The method is applied to a sixth device. The sixth device is configured to: receive a fourth data stream sent by a fourth device and a fifth data stream sent by a fifth device, and synchronously play the fourth data stream and the fifth data stream. The method includes: receiving synchronization group information sent by each of the fourth device and the fifth device, where the synchronization group information includes synchronization reference information and stream information, the synchronization reference information includes identity information of a device at a source end and identity information of a device at a play end, and the stream information includes data type information of a data stream sent by each device at the source end; and determining a synchronous play strategy for a to-be-played data stream based on at least the synchronization group information.

According to an eighth aspect, a technical solution of this application further provides an electronic device, configured to send data through a data transmission interface. The electronic device includes one or more processors, a memory, at least one application, and one or more computer programs. The one or more computer programs are stored in the memory, and the one or more computer programs include instructions. When the instructions are executed by the electronic device, the electronic device is enabled to perform the method according to any one of the fourth aspect to the seventh aspect.

According to a ninth aspect, a technical solution of this application further provides a storage medium, including computer instructions. When the computer instructions are run on an electronic device, the electronic device is enabled to perform the method according to any one of the fourth aspect to the seventh aspect.

According to a tenth aspect, a technical solution of this application further provides a chip system, including: a communication interface, configured to input and/or output data; and a processor, configured to execute a computer-executable program, to enable a device in which the chip system is installed to perform the method according to any one of the fourth aspect to the seventh aspect.

## BRIEF DESCRIPTION OF DRAWINGS

FIG. 1 is an example diagram of a system architecture in a one-to-one casting application scenario;
FIG. 2 is a diagram of an architecture of an audio and video data transmission procedure based on a WebRTC technology in a related technology;
FIG. 3 shows an example of a feasible product hardware architecture of an electronic device according to an embodiment of this application;
FIG. 4(a) to FIG. 4(e) each are example diagrams of a device architecture in a one-to-many casting application scenario;
FIG. 5(a) to FIG. 5(d) each are example diagrams of a one-to-many casting application scenario;
FIG. 6(a) to FIG. 6(c) each are example diagrams of a device architecture in a many-to-one casting application scenario;
FIG. 7 is an example diagram of a system architecture in a one-to-two casting application scenario;

FIG. 8 is an example diagram of a system architecture to which an audio-visual synchronization module is added in a one-to-many casting application scenario;

FIG. 9 is a diagram of a link for delay feedback between a video play device and an audio play device in a one-to-many casting application scenario;

FIG. 10 is a diagram of a video frame processing strategy in a one-to-many casting application scenario;

FIG. 11 is a diagram of a plurality of thread time nodes in a video post-processing procedure;

FIG. 12 is an example diagram of a system architecture in which a second solution is used in a one-to-many casting application scenario;

FIG. 13 is an example diagram of a system architecture for synchronous play in a many-to-many casting application scenario;

FIG. 14 is an example diagram of a typical system architecture in a one-to-many casting application scenario;

FIG. 15 is a schematic flowchart of an embodiment of a synchronous play method;

FIG. 16 is a schematic flowchart of another embodiment of a synchronous play method;

FIG. 17 is a schematic flowchart of still another embodiment of a synchronous play method;

FIG. 18 is an example diagram of a typical system architecture in a many-to-one casting application scenario;

FIG. 19 is a schematic flowchart of yet another embodiment of a synchronous play method; and

FIG. 20 is a diagram of a system architecture of a play system in a one-to-many casting application scenario.

## DESCRIPTION OF EMBODIMENTS

To make the objectives, technical solutions, and advantages of this application clearer, the following clearly and completely describes the technical solutions in this application with reference to specific embodiments and corresponding accompanying drawings in this application. It is clear that the described embodiments are merely some but not all of embodiments of this application. All other embodiments obtained by a person of ordinary skill in the art based on embodiments of this application without creative efforts shall fall within the protection scope of this application.

Terms used in implementations of this application are merely used to explain specific embodiments of this application, and are not intended to limit this application.

In a data casting application scenario such as an audio and video casting application scenario, asynchronous play of a sound and a picture affects viewing experience and degrades user experience. Therefore, audio-visual synchronization needs to be maintained.

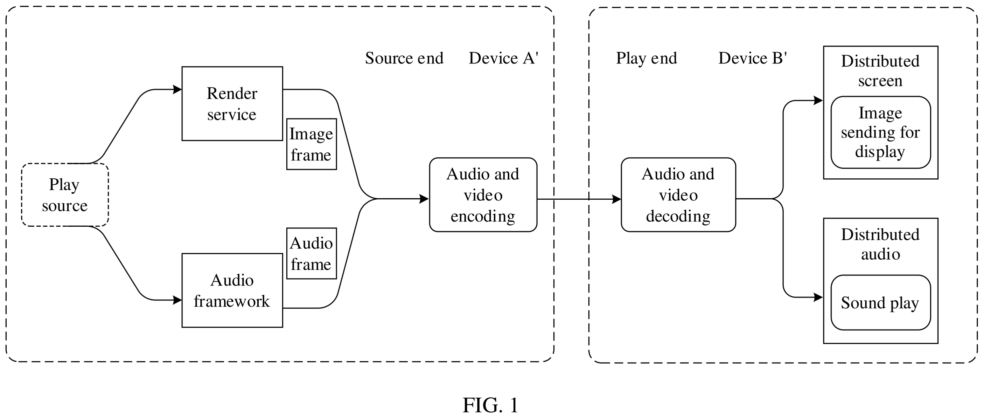

Currently, in a one-to-one casting scenario, audio data and video data may be encoded, decoded, and transmitted through one channel, to maintain synchronous play. One-to-one casting means that each of a source end and a play end includes only one device, and one device (the source end) transmits data to the other device (the play end) for play. For example, as shown in FIG. 1, the source end includes only one device A', and the play end includes only one device B'. The device A' transmits audio and a video to the device B', and the device B' plays the video and audio. In such a one-to-one casting scenario, a device at the source end encodes and transmits a video and audio through one channel, and the play end decodes the video and the audio, and then sends the video and the audio for play. Because the audio and the video are encoded and transmitted through one channel, there is a one-to-one matched correspondence between the audio and the video, that is, play time sequences of an audio frame and a corresponding image frame may be maintained consistent, thereby eliminating asynchronization caused by different audio and video transmission delays and different audio and video frame processing times.

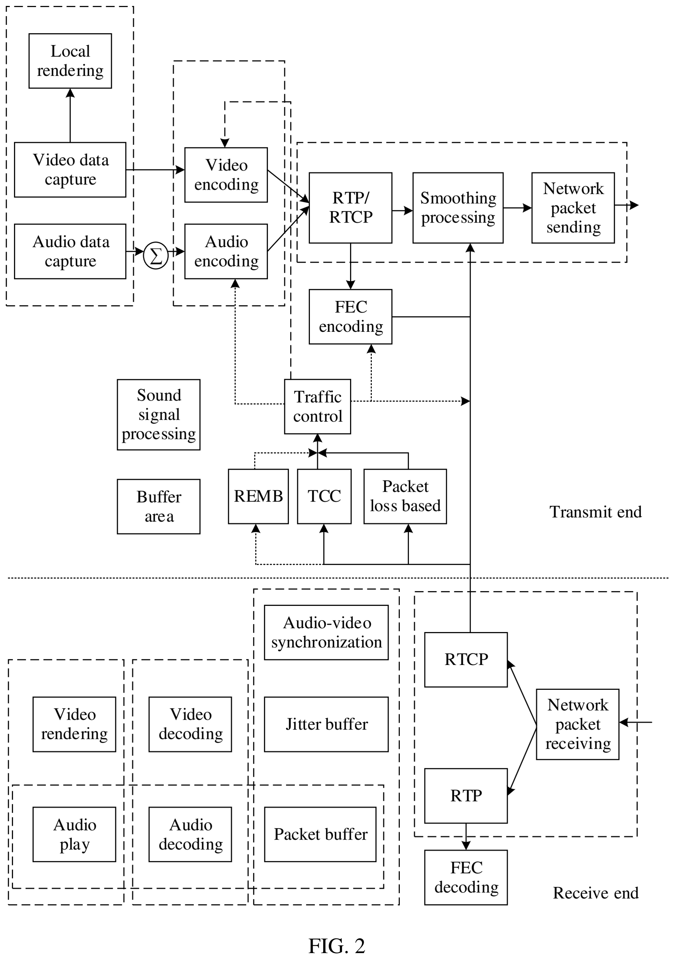

Web real-time communication (Web Real-Time Communication, WebRTC) is a technology that supports a web browser in making a real-time voice call or a video chat, and provides a solution that supports real-time audio and video transmission, including audio and video capture, encoding and decoding, network transmission, display, and the like. The audio and video capture in the technology is carried in a distributed service. As shown in FIG. 2, functions provided by WebRTC include audio and video encoding and decoding, audio and video capture and rendering, transmission, traffic control, audio-visual synchronization, and the like. RTP/RTCP (Real-time Transport Protocol, real-time transport protocol)/(Real-time Transport Control Protocol, real-time transport control protocol) is used as a transmission protocol. RTP completes media data packetization, and RTCP is responsible for QoS (Quality of Service, quality of service) information feedback. After encoding, a transmit end adds redundant information, and a receive end recovers an erroneous bit by using the redundant information, to resolve a bit error in a transmission process. A traffic control module is deployed at the transmit end. Based on QoS information fed back by the receive end, an appropriate sending rate and encoding bit rate for the transmit end are calculated. A jitter buffer is deployed at the receive end to resolve jitter and out-of-order problems during transmission of a data packet.

It may be learned from FIG. 2 that for audio and video data transmission based on the WebRTC technology, on a transmitter side, an audio frame and a video frame are encoded and then packetized based on the RTP/RTCP protocol. After smoothing processing, audio and video data packets are sent through one transmission channel, and on a receiver side, are received through one transmission channel, and then audio decoding and video decoding are separately performed. In this solution, the audio data and the video data are transmitted through one transmission channel.

In the one-to-one casting scenario, audio and video data may be transmitted between a device at the source end and a device at the play end through one transmission channel. In addition, because there is only one device at the play end, it is easy to implement synchronous audio and video play. Therefore, the foregoing solution based on WebRTC may be applied to the one-to-one casting scenario.

However, in a distributed service scenario, there is a service requirement of cross-device casting such as one-to-many casting or many-to-one casting. For example, when the play end includes at least two devices, a device at the source end usually needs to respectively transmit data to the at least two devices at the play end through different transmission channels. In this case, an audio and video transmission solution such as the solution based on the WebRTC technology cannot adapt to cross-device casting or a more complex distributed service scenario.

In view of this, embodiments of this application provide a synchronous play method, to implement synchronous play of streaming media data such as audio and a video in a cross-device casting application scenario, so as to resolve the foregoing problem.

The method provided in embodiments of this application may be applied to various application scenarios in which data is transmitted from a source end to a play end for play, for example, various application scenarios such as video projection to a display device and/or audio projection to an audio play device. For example, one of typical application scenarios of the method may be one-to-many casting in a distributed service scenario. In addition, the method may also be applied to a many-to-one casting scenario or a many-to-many casting scenario.

In embodiments of this application, for clarity of description, an end that sends data is considered as a source end, and the source end includes at least one electronic device; and an end that receives and plays data is considered as a play end, and the play end includes at least one electronic device.

A device (for example, a third device) on a source end side may be an electronic device that can store data and support data sending, for example, may be a mobile phone, a personal computer (personal computer, PC) (for example, a notebook computer), a tablet computer (Tablet Personal Computer, Tablet PC), a wearable electronic device (for example, a smartwatch, a band, glasses, or a collar), a smart sound box, a personal digital assistant (personal digital assistant, PDA), an augmented reality (augmented reality, AR) device, a virtual reality (virtual reality, VR) device, a robot, a smart toy, or a learning machine. A device (for example, a first device or a second device) on a play end side may be an electronic device that supports play of at least one data format, for example, supports audio play and/or video play. Specifically, the device may be various products that support play of data in a format such as a video or audio, for example, a television, a smart screen, a set-top box, a mobile phone, a tablet computer, a personal computer, a wearable electronic device, an augmented reality device, a virtual reality device, a learning machine, or a robot.

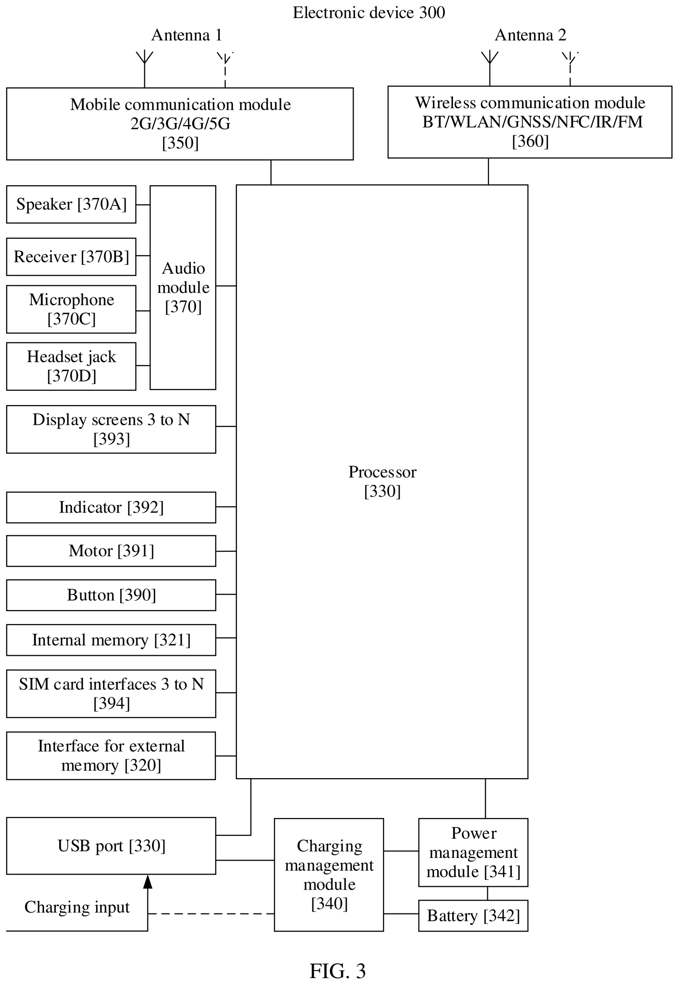

FIG. 3 shows an example of a feasible product hardware architecture of an electronic device. The electronic device 300 may include a processor 310, an interface for external memory 320, an internal memory 321, a universal serial bus (universal serial bus, USB) port 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a button 390, a motor 393, an indicator 392, a display screen 393, a subscriber identity module (subscriber identification module, SIM) card interface 394, and the like.

It may be understood that the structure shown in this embodiment of the present invention is merely an example, and does not constitute a limitation on the electronic device 300. The electronic device in this embodiment of this application may include more or fewer components than those shown in the figure, some components may be combined, or some components may be split, or different component arrangements may be used. The components shown in the figure may be implemented by hardware, software, or a combination of software and hardware.

For example, an electronic device on a source end side may include only a processor 310, an interface for external memory 320, an internal memory 321, a universal serial bus (universal serial bus, USB) port 330, a charging management module 340, a power management module 341, a battery 342, an antenna 1, an antenna 2, a mobile communication module 350, a wireless communication module 360, and the like.

An electronic device on a play end side, for example, an audio play device, may include only a processor 310, an interface for external memory 320, an internal memory 321, a universal serial bus (universal serial bus, USB) port 330, a charging management module 340, a power management module 341, a battery 342, an antenna 1, an antenna 2, a mobile communication module 350, a wireless communication module 360, an audio module 370, a speaker 370A, a button 390, a display screen 394, and the like. For example, a video play device may include only a processor 310, an interface for external memory 320, an internal memory 321, a universal serial bus (universal serial bus, USB) port 330, a charging management module 340, a power management module 341, a battery 342, an antenna 1, an antenna 2, a mobile communication module 350, a wireless communication module 360, a display screen 394, and the like, and optionally, may further include an audio module 370, a speaker 370A, a button 390, and the like.

Specifically, the processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. The controller may generate an operation control signal based on an instruction operation code and a time sequence signal, to complete control of instruction fetching and instruction execution.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor 310 may directly invoke the instructions or the data from the memory. This avoids repeated access and reduces a waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The USB port 330 is an interface that conforms to a USB standard specification, and may be specifically a mini USB port, a micro USB port, a USB type-C port, or the like. The USB port 330 may be configured to be connected to a charger to charge the electronic device 300, or may be configured to transmit data between the electronic device 300 and another device, for example, a device at a source end transmits data to a device at a play end, or may be configured to be connected to a headset to play audio through the headset. The port may be further configured to be connected to another electronic device, for example, an AR device.

It may be understood that an interface connection relationship between the modules shown in this embodiment of the present invention is merely an example for description, and does not constitute a limitation on a structure of the electronic device 300. In some other embodiments of this application, the electronic device 300 may alternatively use an interface connection manner different from that in the foregoing embodiment, or use a combination of a plurality of interface connection manners.

The charging management module 340 is configured to receive a charging input from a charger. The charger may be a wireless charger or a wired charger. In some embodiments of wired charging, the charging management module 340 may receive a charging input from a wired charger through the USB port 330. In some embodiments of wireless charging, the charging management module 340 may receive a wireless charging input through a wireless charging coil of the electronic device 300. When charging the battery 342, the charging management module 340 may further supply power to the electronic device through the power management module 341.

The power management module 341 is configured to connect the battery 342, the charging management module 340, and the processor 310. The power management module 341 receives an input from the battery 342 and/or the charging management module 340, and supplies power to the processor 310, the internal memory 321, the display screen 394, a camera 393, the wireless communication module 360, and the like. The power management module 341 may be further configured to monitor parameters such as a battery capacity, a battery cycle count, and a battery health status (leakage or impedance). In some other embodiments, the power management module 341 may alternatively be disposed in the processor 310. In some other embodiments, the power management module 341 and the charging management module 340 may alternatively be disposed in a same component.

A data transmission function of the electronic device 300 may be implemented through the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the electronic device 300 may be configured to cover one or more communication frequency bands. Different antennas may be further reused to improve antenna utilization. For example, the antenna 1 may be reused as a diversity antenna in a wireless local area network. In some other embodiments, the antenna may be used in combination with a tuning switch.

The mobile communication module 350 may provide a wireless communication solution that includes 2G/3G/4G/5G or the like and that is applied to the electronic device 300. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering and amplification on the received electromagnetic wave, and transfer a processed electromagnetic wave to the modem processor for demodulation. The mobile communication module 350 may further amplify a signal modulated by the modem processor, and convert the signal into an electromagnetic wave for radiation through the antenna 1. In some embodiments, at least some functional modules in the mobile communication module 350 may be disposed in the processor 310. In some embodiments, at least some functional modules in the mobile communication module 350 may be disposed in a same component as at least some modules in the processor 310.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor and then transferred to the application processor. The application processor outputs a sound signal through an audio device (which is not limited to the speaker 370A, the receiver 370B, or the like), or displays an image or a video on the display screen 394. In some embodiments, the modem processor may be an independent component. In some other embodiments, the modem processor may be independent of the processor 310, and is disposed in a same component as the mobile communication module 350 or another functional module.

The wireless communication module 360 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), infrared (infrared, IR), or the like and that is applied to the electronic device 300. The wireless communication module 360 may be one or more components into which at least one communication processing module is integrated. The wireless communication module 360 receives an electromagnetic wave through the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2.

In some embodiments, in the electronic device 300, the antenna 1 and the mobile communication module 350 are coupled, and the antenna 2 and the wireless communication module 360 are coupled, so that the electronic device 300 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 300 implements a display function through the GPU, the display screen 393, the application processor, and the like. The GPU is a microprocessor for image processing, and is connected to the display screen 393 and the application processor. The GPU is configured to perform mathematical and geometric calculation to perform graphics rendering. The processor 310 may include one or more GPUs that execute program instructions to generate or change display information.

The display screen 393 is configured to display an image, a video, and the like. The display screen 393 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini LED, a micro LED, a micro OLED, a quantum dot light-emitting diode (quantum dot light-emitting diode, QLED), or the like. In some embodiments, the electronic device 300 may include three or N display screens 393, where N is a positive integer greater than 3.

The electronic device 300 may implement a video play function through the video codec, the GPU, the display screen 393, the application processor, and the like.

The digital signal processor is configured to process a digital signal, and may process another digital signal in addition to the digital image signal. For example, when the electronic device 300 selects a frequency, the digital signal processor is configured to perform Fourier transform on frequency energy and the like.

The video codec is configured to compress or decompress a digital video. The electronic device 300 may support one or more video codecs. In this way, the electronic device 300 may play or record videos in a plurality of encoding formats, for example, moving picture experts group (moving picture experts group, MPEG)-3, MPEG-2, MPEG-3, and MPEG-4.

Optionally, the NPU is a neural-network (neural-network, NN) computing processor, quickly processes input information with reference to a structure of a biological neural network, for example, with reference to a mode of transfer between human brain neurons, and may further continuously perform self-learning. An application such as intelligent cognition of the electronic device 300 may be implemented through the NPU, for example, intelligent identification of a data type in a data stream.

The interface for external memory 320 may be configured to be connected to an external memory card, for example, a micro SD card, to extend a storage capability of the electronic device 300. The external memory card communicates with the processor 310 through the interface for external memory 320, to implement a data storage function. For example, files such as music and a video are stored in the external memory card.

The internal memory 321 may be configured to store computer-executable program code, and the executable program code includes instructions. The internal memory 321 may include a program storage area and a data storage area. The program storage area may store an operating system, an application required by at least one function (for example, a sound play function or an image play function), and the like. The data storage area may store data (for example, audio data and an address book) and the like created when the electronic device 300 is used. In addition, the internal memory 321 may include a high-speed random access memory, and may further include a non-volatile memory, for example, at least one magnetic disk storage device, a flash memory, or a universal flash storage (universal flash storage, UFS). The processor 310 runs the instructions stored in the internal memory 321 and/or the instructions stored in the memory disposed in the processor, to perform various functional applications and data processing of the electronic device 300.

The electronic device 300 may implement an audio function, for example, music play, through the audio module 370, the speaker 370A, the receiver 370B, the microphone 370C, the headset jack 370D, the application processor, and the like.

The audio module 370 is configured to convert digital audio information into an analog audio signal for output, and is further configured to convert an analog audio input into a digital audio signal. The audio module 370 may be further configured to encode and decode an audio signal. In some embodiments, the audio module 370 may be disposed in the processor 310, or some functional modules in the audio module 370 may be disposed in the processor 310.

The speaker 370A, also referred to as a "horn", is configured to convert an audio electrical signal into a sound signal. The electronic device 300 may be used to listen to music or answer a hands-free call through the speaker 370A.

The receiver 370B, also referred to as an "earpiece", is configured to convert an audio electrical signal into a sound signal. When a call is answered or voice information is listened to by using the electronic device 300, the receiver 370B may be put close to a human ear to listen to a voice.

The microphone 370C, also referred to as a "mike" or a "mic", is configured to convert a sound signal into an electrical signal. When making a call or sending voice information, a user may place the mouth of the user near the microphone 370C to make a sound, to input a sound signal to the microphone 370C. At least one microphone 370C may be disposed in the electronic device 300. In some other embodiments, two microphones 370C may be disposed in the electronic device 300, to capture a sound signal and implement a noise reduction function. In some other embodiments, three, four, or more microphones 370C may alternatively be disposed in the electronic device 300, to capture a sound signal, implement noise reduction, identify a sound source, implement a directional recording function, and the like.

The headset jack 370D is configured to be connected to a wired headset. The headset jack 370D may be a USB port 330, or may be a 3.5 mm open mobile terminal platform (open mobile terminal platform, OMTP) standard interface or cellular telecommunications industry association of the USA (cellular telecommunications industry association of the USA, CTIA) standard interface.

The button 390 includes a power button, a volume button, or the like. The button 390 may be a mechanical button, or may be a touch button. The electronic device 300 may receive a button input, and generate a button signal input related to a user setting and function control of the electronic device 300.

The motor 391 may generate a vibration prompt. The motor 391 may be configured to provide a data transmission success prompt, or may be configured to provide play feedback. For example, whether data transmission succeeds may correspond to different vibration feedback effects. Different play cases (for example, synchronous play, play of a video being ahead of that of audio, and play of audio being ahead of that of a video) may also correspond to different vibration feedback effects. A touch vibration feedback effect may be further customized.

The indicator 392 may be an indicator light, and may be configured to indicate a charging status and a power change, or may be configured to indicate a message, a missed call, a notification, and the like.

The SIM card interface 394 is configured to be connected to a SIM card. The SIM card may be inserted into the SIM card interface 394 or removed from the SIM card interface 394, to come into contact with and be separated from the electronic device 300. The electronic device 300 may support three or N SIM card interfaces, where N is a positive integer greater than 3. The SIM card interface 394 may support a nano-SIM card, a micro-SIM card, a SIM card, and the like. A plurality of cards may be simultaneously inserted into a same SIM card interface 394. The plurality of cards may be of a same type or different types. The SIM card interface 394 may be compatible with different types of SIM cards. The SIM card interface 394 is also compatible with an external memory card. The electronic device 300 interacts with a network through the SIM card, to implement functions such as conversation and data communication. In some embodiments, the electronic device 300 uses an eSIM, namely, an embedded SIM card. The eSIM card may be embedded into the electronic device 300, and cannot be separated from the electronic device 300.

The following describes a typical application scenario in this application by using an example.

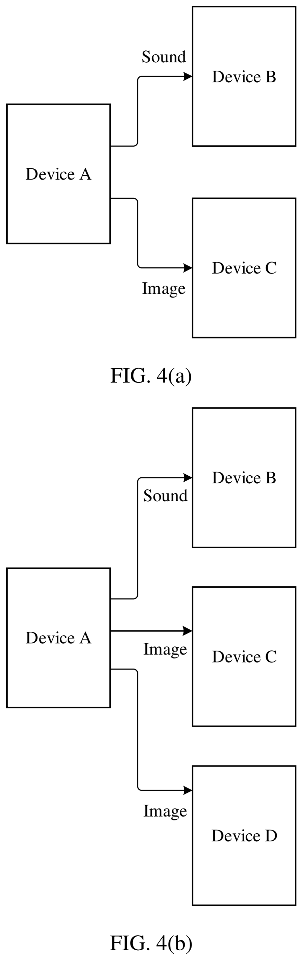

One-to-many casting means that a source end includes only one device, and a play end includes at least two devices. Data is transmitted from the source end to the at least two devices at the play end through at least two transmission channels for separate play. For example, as shown in FIG. 4(a), a device A is a device at the source end, and a device B and a device C are devices at the play end. The device A transmits audio data (a sound) to the device B through a transmission channel, to play audio through the device B, and transmits video data (an image) to the device C through another transmission channel, to play a video through the device C.

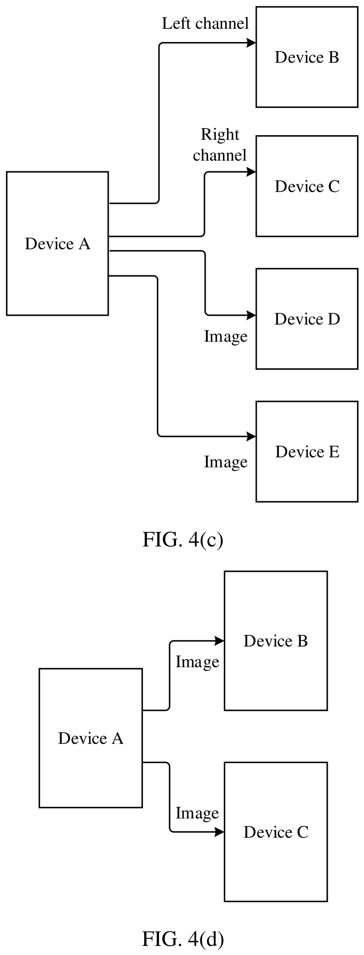

A quantity of devices included at the play end may be greater than 2. FIG. 4(a) shows only a case in which the quantity of devices is 2. In actual application, the quantity of devices at the play end may be 3 or more. For example, as shown in FIG. 4(b), the play end may include a device B, a device C, and a device D. The device A respectively transmits data to the device B to the device D through three transmission channels. The device B may be a sound box, and is configured to play audio. Both the device C and the device D are display screens, and are respectively configured to display different parts of a same picture, and the two display screens are spliced to display a complete image. For another example, as shown in FIG. 4(c), the play end may include a device C, a device D, a device D, and a device E. Data on a side of the device A is respectively transmitted to the device B to the device E through four transmission channels. Both the device C and the device D are sound boxes, and are respectively configured to play a left channel and a right channel. Both the device D and the device E are display screens, and are configured to be spliced to display a complete image in a video frame.

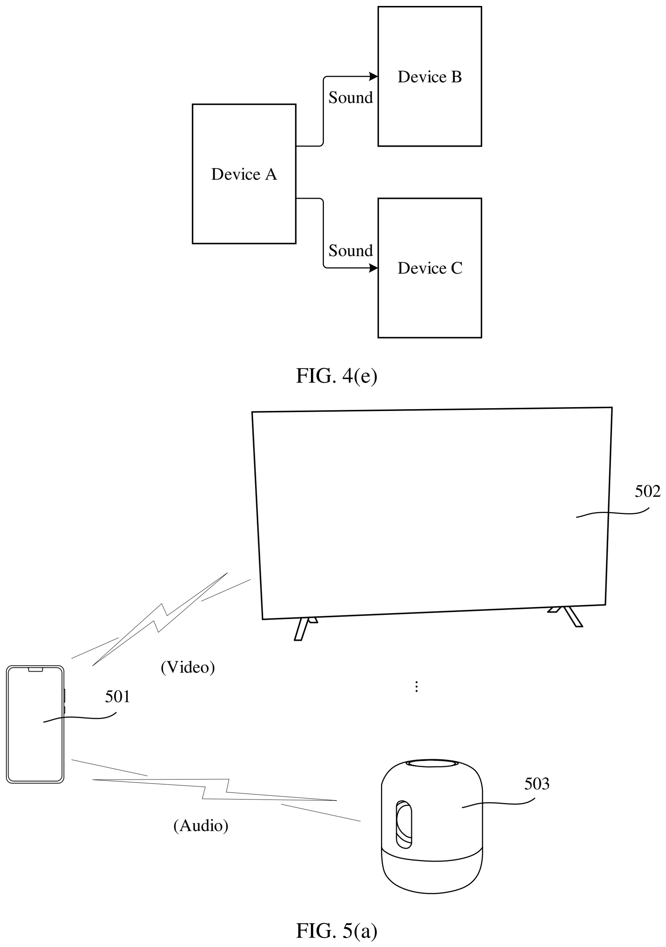

In addition, data transmitted from the source end to the play end through different transmission channels may be data of different types or may be data of a same type. For example, as shown in FIG. 4(d), both of two transmission channels transmit video data (an image). For example, both the device B and the device C are display screens, and the device B and the device C are configured to be spliced to display a complete same image. Alternatively, the device B and the device C are configured to independently display a same complete image, but are placed at different positions in an application scenario for multi-view viewing. As shown in FIG. 4(e), both of two transmission channels transmit audio data (a sound), and both the device B and the device C are sound boxes. One transmission channel transmits left-channel data, and the other transmission channel transmits right-channel data. Similarly, the quantity of devices at the play end may be at least 3, and is not limited to 2.

With reference to an actual application scenario, as shown in FIG. 5(a), in one-to-many casting in a distributed service scenario, a device at the source end may be a mobile terminal device 501. For example, the mobile terminal may be a mobile phone or a tablet computer. The play end includes a display screen 502 and an audio play device 503. For example, the display screen may be a smart screen or a television, and the audio play device may be a sound box, a smart assistant, or a robot with an audio play function. For example, the mobile phone transmits audio to the sound box to play the audio, and transmits a video to the display screen to play the video.

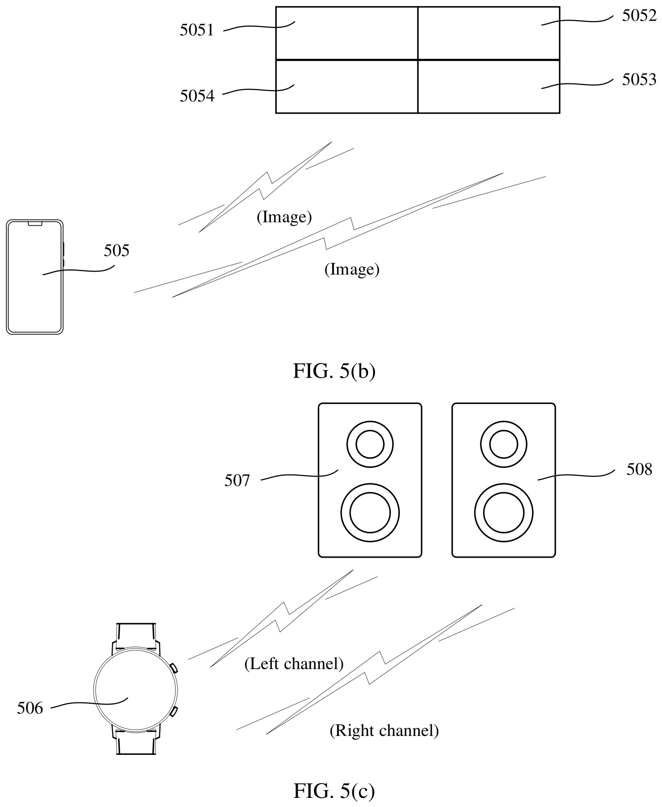

For example, as shown in FIG. 5(b), in one-to-many casting, a mobile terminal 504 may respectively transmit an image to display devices 5051 to 5054 through four transmission channels. Each of the display devices 5051 to 5054 displays a part of the image, and the four display devices are spliced together to display a complete image on a large screen. A relative delay of audio and video play is perceived only when the delay exceeds a specific degree. For example, a relative delay of -185 ms to 90 ms is allowed for synchronous audio and video play. When the four display devices are spliced to display a large complete image, asynchronization between images is clearer through comparison because a picture played on each device is compared with pictures on the other three devices. Therefore, synchronization control in such a scenario needs to be more accurate than synchronous play control in an audio and one-channel video scenario. In such a scenario in which a plurality of channels of images are spliced into a complete image, a shorter delay time is allowed. For example, the relative delay time may need to be controlled to be less than an interframe interval, for example, controlled to be within 33 ms or 16.7 ms.

For another example, as shown in FIG. 5(c), in a one-to-many casting scenario, a smart wearable device 506 may separately transmit audio to a left channel 507 and a right channel 508 of a vehicle-mounted sound box. For example, the smart wearable device is a smartwatch, and transmits the audio to different sound channel devices of the vehicle-mounted sound box based on a streaming media transmission protocol. In this application scenario, in a driving process of a vehicle, a motorcycle, or an electric vehicle, a function key or a button for one-touch casting may be disposed on the smartwatch, and a driver may cast audio through one touch, play music through the vehicle-mounted sound box, or the like. It should be noted that the method provided in embodiments of this application does not limit a data transmission channel, and therefore may be used in various distributed service scenarios in which an intelligent terminal (for example, a watch or a mobile phone) casts audio to a vehicle-mounted sound box. In comparison, in a related solution, Bluetooth transmission is used as an example. In a connected working mode, a plurality of CISs (Connected Isochronous Streams) need to belong to a same channel group CIG (Connected Isochronous Group). To achieve synchronous processing, the CIG assigns different delay parameters to all the CISs, so that the CISs are synchronously processed after respective time periods. CISs in a same CIG have a same timestamp. In a non-connected working mode, a plurality of BISs (Broadcast Isochronous Streams) need to belong to a same broadcast group BIG (Broadcast Isochronous Group). It may be learned that in the related solution, data streams need to belong to a same channel group or a same broadcast group, and a data transmission channel is limited. However, the method provided in embodiments of this application may not be subject to this limitation.

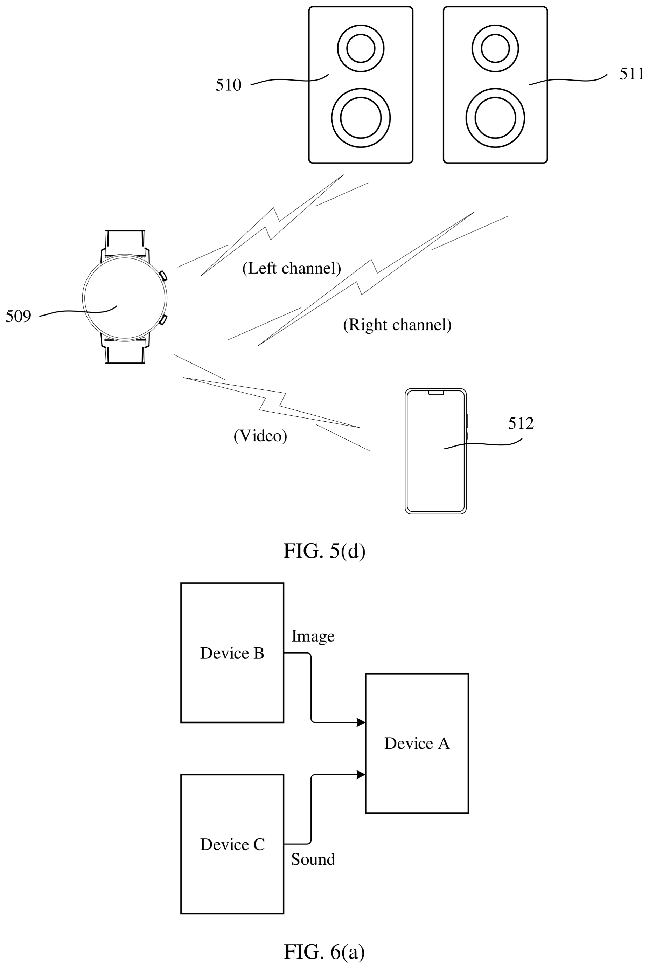

For another example, as shown in FIG. 5(d), in a one-to-many casting scenario, a device at the source end may be a smart wearable device 509, and in addition to vehicle-mounted sound boxes 510 and 511, a device at the play end may further include a mobile terminal 512, for example, a smartphone. For example, the smart wearable device is a smartwatch. In a driving process of a user, the smartwatch monitors data such as a heart rate of the user, generates a video format file that supports display on the mobile terminal and that can dynamically display heart rate data, generates a voice prompt accompanying the heart rate data, transmits data in a video format to the bound mobile phone in real time for display, and transmits a voice to the vehicle-mounted sound box for play. For example, when the video displays an abnormal heart rate, voice broadcast content, for example, "It is detected that your heart rate is abnormal. Please stop for a rest or seek help as soon as possible", is synchronously played through the vehicle-mounted sound box. For synchronization in this scenario, control accuracy of synchronous play is lower than that in the scenario shown in FIG. 5(a), and a play delay time of the voice relative to the video may be less than 2s.

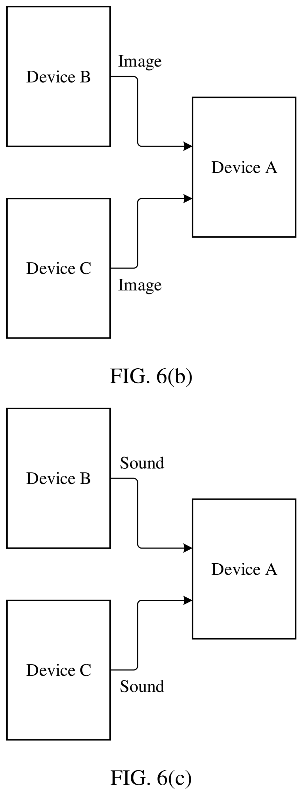

A many-to-one casting scenario means that a source end includes different devices, and a play end includes only one device. Data is respectively transmitted from the different devices at the source end to the play end through at least two transmission channels for play. For example, as shown in FIG. 6(a) to FIG. 6(c), a device B and a device C respectively transmit video data (an image) and audio data (a sound) to a device A through different transmission channels, to play the video data and the audio data through the device A. Alternatively, a device B and a device C respectively transmit an image to a device A through two transmission channels for play. Alternatively, a device B and a device C respectively transmit a left channel and a right channel of a sound to a device A through two transmission channels for play. Similarly, a quantity of devices included at the source end may be greater than 2, but is not limited to 2.

Optionally, a software environment in which the method provided in embodiments of this application is implemented may be a distributed operating system, for example, implemented based on a distributed operating system HarmonyOS. For example, a distributed hardware management framework may be deployed in the distributed operating system. The distributed hardware management framework may be configured to provide an information management capability to a distributed hardware subsystem.

In embodiments of this application, the transmission channel may be one or more of various channels that can implement point-to-point data transmission based on a transmission medium. For example, optionally, the transmission channel may be a channel or a data link.

For example, data transmission between devices may be implemented based on one or more of wireless projection protocols such as Miracast, DNLA (Digital Living Network Alliance), WiDi (Intel Wireless Display, wireless high-definition technology), and Air-Play.

It should be noted that in embodiments of this application, to-be-cast data may be various data formats that support play on a device at a play end, for example, may be streaming media data that is mainly audio and video data. The streaming media data may include one or more of data streams such as a sound stream, a video stream, a text stream, a picture stream, and an animation stream. For example, in some embodiments, the to-be-cast data may be audio and/or video data. For example, at least two channels of audio are cast, at least two channels of videos are cast, or at least one channel of audio and at least one channel of video are cast.

The video data may be in one or more of video formats such as MPEG (Moving Picture Experts Group, moving picture experts group), AVI (Audio Video Interleave, audio video interleave), WMV (Windows Media Video), QuickTime, RealVideo, Flash, MPEG-4, and newAVI. The audio data may be in one or more of audio formats such as MP3 (Moving Picture Experts Group Audio Layer III, moving picture experts group audio layer III), WMA (Windows Media Audio), AAC (Advanced Audio Coding, advanced audio coding), WAV (Waveform audio format Sound), and APE (Monkey's Audio).

The to-be-cast data may alternatively be a media file, is not limited to including only one stream type, and may include a video, audio, and a subtitle, or even a plurality of channels of video, a plurality of channels of audio (multi-channel), dual subtitles, or the like.

In another embodiment, it is not excluded that the to-be-cast data may be a combination of audio data and/or video data and data in a format such as a document or a picture. The following mainly uses the audio data and the video data as examples for description.

According to the synchronous play method provided in embodiments of this application, in a one-to-many casting scenario, a play time of streaming media on one (a first device) of a plurality of devices at a play end is used as a reference to control play of streaming media on another device at the play end, to implement synchronous play between the plurality of devices at the play end. The play time used as a reference may be an actual play time, or may be an estimated play time obtained through estimation with reference to a transmission delay, a decoding delay, and the like corresponding to the first device. For example, a play time difference may be obtained based on at least an actual play time of each data frame on one device at the play end and a presentation timestamp of each data frame to be played on another device, and play of the data frame to be played on the another device is adjusted based on the play time difference, to implement synchronization. Alternatively, an estimated play time of each data frame on one device at the play end is used as a reference to obtain an estimated play time that is of a data frame to be played on another device and based on which synchronization can be implemented, and a timestamp corresponding to the estimated play time is added to each data frame before data transmission, to direct the another device at the play end to perform play control based on the estimated play time, so as to implement synchronization.

In a many-to-one scenario, after clock synchronization is performed between a plurality of devices at a source end and one device at a play end, an interface is reserved in a control center through setting at a service layer, and synchronization information is set in a frame header, to implement synchronization in the many-to-one scenario.

The following describes in detail how to specifically implement synchronous play between different devices at the play end in the one-to-many casting scenario.

In embodiments of this application, for the one-to-many casting scenario, at least two solutions are provided to implement synchronous play between different devices at the play end. The two solutions can be implemented independently or in combination.

In a first solution, an actual play time on one device at the play end is used as a reference time to control a play time on another device, so as to implement synchronization.

In a second solution, before sending data, a source end obtains an estimated value of a presentation timestamp based on information such as a transmission delay and a decoding delay fed back by one device at the play end, and another device at the play end may directly compare the estimated value of the presentation timestamp with a current time to control play, so as to implement synchronization.

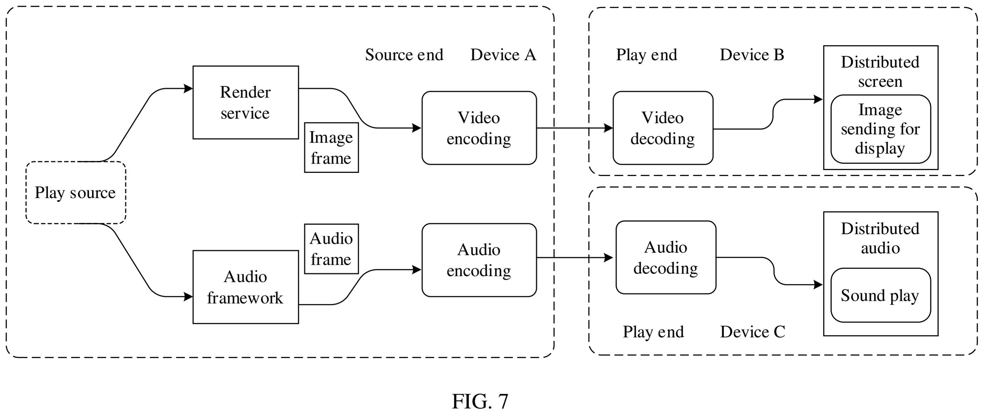

For example, a one-to-two casting scenario is used as an example. FIG. 7 shows a system architecture in the one-to-two casting scenario. The system architecture includes a source end and a play end. A device A at the source end respectively performs video encoding on an image frame data stream and performs audio encoding on an audio frame data stream through two channels, and then respectively transmits the image frame data stream and the audio frame data stream to a device B and a device C at the play end through two transmission channels. After the device B performs video decoding, sending to an image sending for display module is performed, to display a video image through a distributed screen. After the device C performs audio decoding, sending to a sound play module is performed, to play a sound through distributed audio.

In this scenario, audio and a video are separately encoded and transmitted, and are transmitted through different transmission channels. Different times are consumed in data processing procedures such as encoding and decoding of the audio and the video. In addition, during transmission through different transmission channels, there may be different communication statuses, and network jitter may cause a more random play start time. Therefore, in a case in which audio and a video are separated, it is difficult to synchronize presentation timestamps between different devices.

For example, the system architecture shown in FIG. 7 is used as an example to describe the first solution in detail.

A PTS (Presentation Timestamp, presentation timestamp) corresponding to an audio frame or a video frame obtained by the play end after decoding is a raw timestamp generated by an encoder at the source end, and is not an actual play time. Therefore, an actual play time of each frame of data on one device needs to be learned of, and synchronization between a plurality of devices is implemented based on the actual play time.

For example, the data streams transmitted through the two transmission channels are an audio data stream and a video data stream. In this case, considering that people have different sensitivity to an image and a sound, and are usually more sensitive to audio than to a video, after an audio play device at the play end receives the audio data stream and caches the audio data stream for a specific length, an audio frame may be first normally played, and then an actual play time of the audio frame is used as a reference to adjust play of a video frame on a video play device, so as to implement audio-visual synchronization.

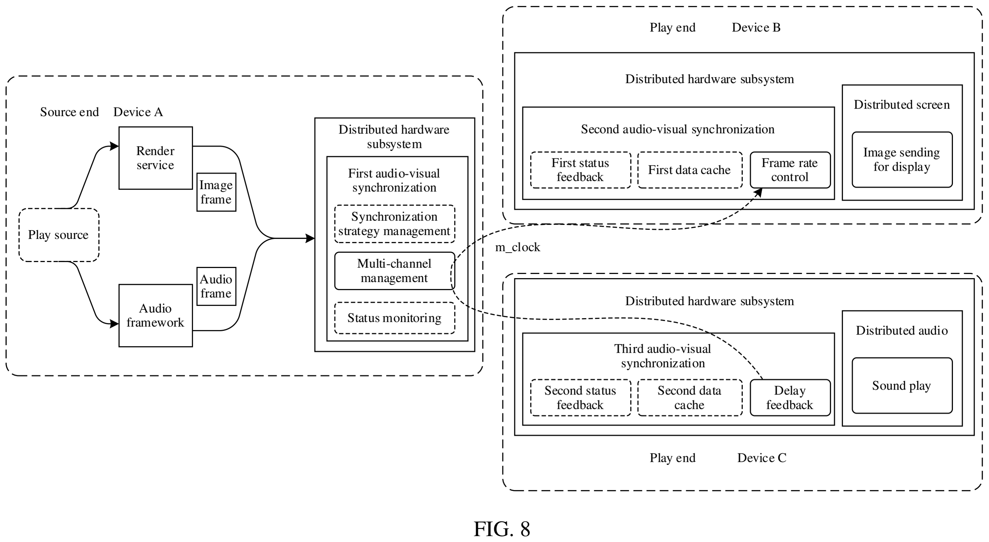

Specifically, as shown in FIG. 8, an audio-visual synchronization module is deployed in a distributed hardware subsystem of each of the device at the source end and the device at the play end, and audio-visual synchronization modules in different devices implement different functions.

In some embodiments, a first audio-visual synchronization module is additionally disposed in the device A at the source end, and the first audio-visual synchronization module includes at least a multi-channel management module; a second audio-visual synchronization module is additionally disposed in the device B at the play end, and the second audio-visual synchronization module includes at least a frame rate control module; and a third audio-visual synchronization module is additionally disposed in the device C at the play end, and the third audio-visual synchronization module includes at least a delay feedback module.

Optionally, because different duration is consumed in video and audio processing procedures, a data cache module may be further added to the audio-visual synchronization module at the play end, to ensure smooth play and offset impact of uneven packet sending and receiving caused by network jitter. In some embodiments, the data cache module may not be disposed.

For example, the second audio-visual synchronization module includes a first status feedback module, a first data cache module, and the frame rate control module. The third audio-visual synchronization module includes a second status feedback module, a second data cache module, and the delay feedback module.

In another embodiment, the data cache module may not be disposed in the second audio-visual synchronization module and the third audio-visual synchronization module, or the first status feedback module and the frame rate control module may be integrated into a same module, or the second status feedback module and the delay feedback module may be integrated into a same module. Provided that a corresponding function is implemented, a plurality of specific manners of disposing a module may be obtained through form changes. The manners are not listed one by one in this specification of this application.

Similarly, in specific implementation, a synchronization strategy management module, the multi-channel management module, and a status monitoring module in the device at the source end may be integrated into a same module or integrated into two modules for implementation. For example, the synchronization strategy management module and the multi-channel management module are integrated into a management module, or the status monitoring module and the synchronization strategy management module are integrated into a same module, or the synchronization strategy management module, the multi-channel management module, and the status monitoring module are integrated into a same module. Another specific implementation is not described in this specification of this application.

The synchronization strategy management module determines a synchronization strategy based on a to-be-played data type.

A strategy library may be deployed or an interface that can access a strategy library may be set in the synchronization strategy management module, and the strategy library stores synchronization strategies corresponding to various data types. The data type includes data format information to be played on different devices. For example, the to-be-played data includes only audio format data, or includes only video format data, or includes both audio data and video data, or includes data in another format in addition to audio and video data.

For a delay and freezing, a human hearing sense is more sensitive than a visual sense, and normal audio output is usually maintained as much as possible. In some embodiments, for a data type including audio data and video data, a used synchronization strategy is to use audio as a master and a video as a slave, that is, play of an audio frame is used as a reference, and play progress of a video frame follows that of the audio frame.

When two or more channels of data streams are all videos or two or more channels of data streams are all audio, any one of a plurality of devices at the play end may be selected as a master, and the other devices are slaves.

The following mainly uses an example in which one channel of audio data and one channel of video data are included for description. For another data type, a corresponding synchronization strategy may be adaptively obtained with reference to the example descriptions.

The video play device (the device B) identifies, through the first status feedback module, that a data type of a current to-be-played data stream is a video, monitors a connection status of a transmission channel between the device A and the device B, and feeds back data type information and connection status information to the status monitoring module in the source device A. Similarly, the audio play device (the device C) identifies, through the second status feedback module, that a data type of a current to-be-played data stream is audio, monitors a current connection status of a transmission channel, and feeds back data type information and connection status information to the status monitoring module in the source device A.

The status monitoring module in the device A first determines, based on the connection status information that is of the transmission channels and that is fed back by the device B and the device C, whether to continue to transmit data. The connection status of the transmission channel is a communication status of the transmission channel, that is, whether data can be normally sent. For example, when the connection status information indicates that communication is disconnected, it is clear that synchronous play of subsequent data cannot be implemented. In this case, it may wait for the communication to resume, play on each device is paused first, and a user is prompted that a network is disconnected or a play failure is prompted. A corresponding synchronization strategy is used after the transmission channel resumes normal communication.

When the connection status indicates that communication is normal, the status monitoring module updates, in real time based on the data type information of the two data streams fed back by the device B and the device C, current to-be-played data type information, and inputs updated data type information to the synchronization strategy management module.

Different synchronization strategies may be used for different data types. For example, if one channel is audio and the other channel is a video, and if both of two channels are videos, there may be specific different synchronization strategies. Therefore, the device at the source end first needs to learn of a to-be-played data type, and then determines a synchronization strategy corresponding to the data type through the synchronization strategy management module.

After the synchronization strategy is determined, the synchronization strategy management module triggers the corresponding synchronization strategy. For example, the multi-channel management module is triggered to receive actual play time information of each audio frame sent by the device C.

To reduce a quantity of times of information transmission between the device at the play end and the device at the source end, the device C may actively feed back an actual play time of the audio frame to the device A through the delay feedback module. For example, an actual play time of an $m^{th}$ audio frame that is just played is denoted as m_clock, and is sent to the device A.

After receiving m_clock, the device A immediately forwards m_clock to the device B.

The device B makes comparison at least with a presentation timestamp (Video Presentation Timestamp, Vpts) time of a corresponding video frame by using the received actual play time m_clock of the audio frame as a reference time through the frame rate control module, and controls play progress of the video frame based on a comparison result.

Optionally, the first data cache module is configured to: cache video data, and smooth an encoding/decoding delay and network jitter. A video frame in a queue is used as an input to the frame rate control module. The second data cache module caches audio data, and smooths impact of an encoding/decoding delay and network jitter on a play time.

As shown in FIG. 8, the audio play device (the device C) obtains an actual play time m_clock of an audio frame through the delay feedback module, and feeds back the actual play time to the multi-channel management module in the device A at the source end. The multi-channel management module then feeds back m_clock to the frame rate control module in the video play device (the device A).

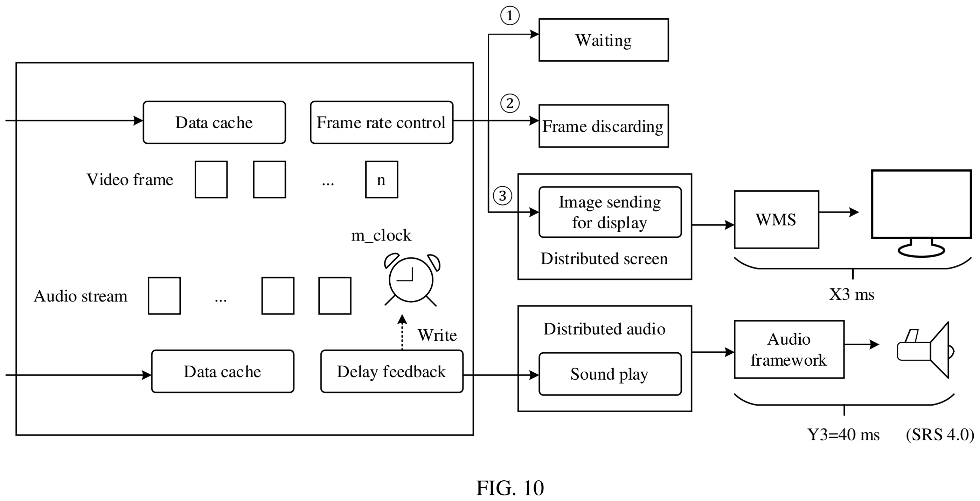

As shown in FIG. 10, in an implementation, in the audio play device, each time an audio frame is played, the delay feedback module writes an actual play time of the played frame into a master clock m_clock. Certainly, in another embodiment, each time after several audio frames are played, an actual play time of each of the several audio frames may be written at a time, to reduce a delay caused by frequent writing. Alternatively, writing is performed for every several audio frames, and an actual play time of only one audio frame is selected for writing. For example, an actual play time of only one audio frame is written for every two audio frames.

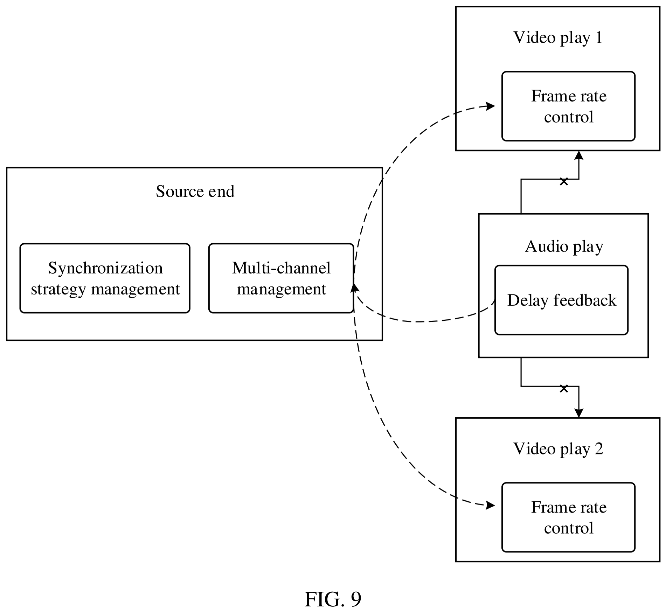

As shown in FIG. 9, in a distributed service scenario, there is no transmission channel for direct communication between different devices at the play end, and it is difficult for the video play device to obtain actual play time information of an audio frame on the audio play device. If the audio play device and the video play device directly perform delay feedback, a corresponding transmission channel needs to be established, or forwarding is performed two times through the source end. For example, the video play device needs to send a request first, which is forwarding performed for the first time, and then the audio play device feeds back the play time information, which results in forwarding performed for the second time. There is high link pressure if a new link is established or forwarding is performed two times. Therefore, in some embodiments of this application, the delay feedback module in the audio play device actively sends the audio play time information to the source end, and the source end forwards the audio play time information to another device. Through one time of forwarding, the another device may obtain the audio play time information from the audio play device, thereby reducing the link pressure.

It should be noted that, in another embodiment, an implementation in which a transmission channel is established between the video play device and the audio play device or forwarding is performed two times through the source end, so that another device such as the video play device can obtain the audio play information is not excluded.

After the video play device obtains the actual play time of the audio frame, the frame rate control module fetches one frame of image from the cache queue, reads a presentation timestamp Vpts of the frame of image, and calculates a play time difference diff based on at least Vpts and m_clock.

As shown in FIG. 10, after the frame rate control module calculates diff, a processing strategy for the current to-be-played video frame is determined based on diff, for example, whether to continue to wait, or perform frame discarding processing, or directly send the video frame for display.

Optionally, in some embodiments, that the frame rate control module fetches one frame of image from the cache queue may be that one frame of image is fetched at an interval of a fixed time based on a specified frame rate (Frame Rate). The time interval $t_0$ is determined based on the frame rate Fr, and $t_0 = n * 1/Fr$, where n is an integer equal to 1 or greater than 1, and n is used to control a proportion of fetching a video frame from the cache queue. If n=1, it is equivalent to that fetching from the cache queue is performed frame by frame, and the play time difference diff needs to be calculated for each video frame in the cache queue, to determine whether to send the video frame for display, whether to perform frame discarding, or the like. If n=2, it indicates that one frame is fetched from every two frames in the cache queue to calculate the play time difference diff. If n=3, it indicates that one frame is fetched from every three frames in the cache queue to calculate the play time difference diff. A larger value of n indicates lower synchronization control accuracy, and a synchronization effect may deteriorate as the value of n increases. In some embodiments, $n \leq 3$.

For example, if n=1, and the frame rate is 30 fps (frames per second), $t_0 = 1*1/30 \approx 0.033s \approx 33$ ms, that is, one frame of image is fetched from the cache queue every 33 ms, which is equivalent to that fetching is performed frame by frame, and the play time difference from the audio frame is calculated frame by frame, to determine whether to send the frame for display. If the frame rate is 60 fps, $t_0 = 1*1/60 \approx 0.017s \approx 16.7$ ms. In this case, one frame is fetched from the cache queue every 16.7 ms.

It should be noted that a currently fetched next video frame and the currently received $m^{th}$ audio frame may originally not be two data frames that need to be synchronously played. Therefore, difference calculation performed to obtain the play time difference should be performed based on an audio frame and a video frame that have a mapping relationship. The video frame and the audio frame that have a mapping relationship mean that it is considered that there is a mapping relationship between an audio frame and a video frame that present a synchronous play effect in terms of a play time sequence. Specifically, the mapping relationship may be determined based on at least one of a presentation timestamp PTS and a sequence number (sequence number).

A video frame rate is usually different from an audio frame rate. For example, if the device C writes a clock each time an audio frame is played, a clock sending frequency may be the same as or close to the frame rate. If the audio frame rate is 50 fps, a clock is sent every 20 ms. For example, an actual play time of an $(m+1)^{th}$ audio frame is m+1_clock. However, in the video play device, for example, the video frame rate is 30 fps, that is, one frame is fetched from the cache queue every 33 ms. In this case, a frequency of fetching a video frame is different from a clock receiving frequency.

For the comparison operation of determining whether there is a mapping relationship, a trigger condition may be that a video frame is fetched. That is, each time a video frame is fetched, a mapping relationship is identified with a latest received clock, for example, a sequence number is read, and it is determined, based on the sequence number, whether there is a mapping relationship. In this case, at the device at the source end, not only a PTS needs to be added, but also a sequence number needs to be added.

In an implementation, in addition to adding a sequence number or a PTS, a sequence number or a PTS that has a mapping relationship with a current audio/video frame or a current audio frame may be further recorded. That is, in some embodiments, for each data frame or several data frames, a sequence number or a PTS of another data frame that has a mapping relationship with the current data frame may be recorded. In this way, difference calculation does not need to be performed at the play end, and the sequence number or the PTS that has a mapping relationship is directly read, to learn whether there is a mapping relationship.

For example, at the device A, before the video data stream is sent, for each video frame, in addition to adding Vpts, a sequence number is further added, and information about another sequence number that has a mapping relationship with the video frame is added and may be added in a form of an array. For example, if a sequence number of the current video frame is 80, and sequence numbers of at least one audio frame that has a mapping relationship with the video frame are 98 and 99, an added sequence number array may be [80:98, 99], where 80 represents the sequence number of the video frame, and 98 and 99 represent sequence numbers of two audio frames that have a mapping relationship with the video frame. At the play end, after an audio data stream packet and a video data stream packet are decoded, a sequence number or a sequence number array corresponding to each data frame may be read.

In addition, in another implementation, the PTS represents a play time sequence, and is actually sequence information. Therefore, it is not excluded that the mapping relationship between the audio frame and the video frame may be determined by using the presentation timestamp PTS. The source end performs encoding before sending data. Most encoders generate a presentation timestamp PTS of each frame during encoding. The timestamp is used to mark a play sequence of each frame. Based on the play sequence, a mapping relationship between a video frame and an audio frame may be determined. That is, the mapping relationship is determined based on Vpts and Apts (Audio Presentation Timestamp, audio presentation timestamp).

For example, before the device at the source end sends data, a presentation timestamp PTS is added for each data frame. Usually, because the video frame rate is different from an audio sampling rate, there is no one-to-one mapping relationship between the video frame and the audio frame. It is assumed that one audio frame is sampled every 20 ms, and the video frame rate is 30 fps, that is, one frame is generated every 33 ms. If a timestamp of an audio capture start moment is 80, an approximate increasing pattern of PTSs of the video frame and the audio frame is: video frame VPTS: 109, 142, 175, 208, 241, 274, ...; audio frame APTS: 80, 100, 120, 140, 160, 180, .... If it may be determined, at the play end, that a clock frequency of the PTS is consistent with a time reference (for example, Greenwich mean time), the mapping relationship between the audio frame and the video frame may be directly determined by calculating a timestamp difference. Alternatively, expected play time information may be obtained based on the play sequence indicated by the presentation timestamp and with reference to information such as a time base time_base or a clock frequency (crystal oscillator frequency), and the mapping relationship between the audio frame and the video frame may also be determined based on the expected play time information.

For example, it is considered that there is a mapping relationship between an audio frame and a video frame whose PTS difference is less than a predetermined mapping threshold. For example, the specified threshold may be 33. For example, in the foregoing sequence, the PTS of the first audio frame is 80, the PTS of the first video frame is 109, and a difference between the two frames is less than 33, and therefore it may be considered that there is a mapping relationship between the two frames. The mapping threshold is not unique. For example, when the video frame rate is 60 fps, the mapping threshold may be 20.

It should be noted that in this implementation, the device C needs to feed back original Apts of the audio frame when feeding back the actual play time clock, that is, Apts is carried in information used to send the clock. In this way, the video play device may first read Apts of the audio frame, and compare Vpts with Apts. If a difference between Vpts and Apts is less than the mapping threshold, it is considered that there is a mapping relationship between the two frames. For example, after conversion into time information is performed, if the difference is less than 33 ms, it is considered that there is a mapping relationship between the two frames.

In actual application, there may be no mapping relationship between the next video frame currently fetched from the cache queue and currently latest received m_clock. In this case, a sequence relationship between an audio frame that has a mapping relationship with the currently fetched video frame and currently received m_clock may be determined based on a sequence number or a PTS. Both the sequence number and the PTS can express sequence information of a play sequence. Therefore, through comparison of sequence numbers or PTSs of the video frame and the audio frame, the sequence relationship can be identified even if the mapping relationship cannot be determined. If the currently received $m^{th}$ audio frame should be played before the currently fetched video frame, that is, an audio frame that should be synchronously played with the current video frame is after the current $m^{th}$ audio frame, the video play device may wait for receiving a subsequent audio frame. If the $m^{th}$ audio frame should be played after the currently fetched video frame, an audio frame that has a mapping relationship with the current video frame may be found from a plurality of received clocks, and an actual play time of the audio frame is read, to perform difference calculation.

It should be noted that the PTS is added by the source end, and represents a relative sequence of the play time sequence of each data frame, but is not an actual play time. Therefore, Vpts and Apts may be used to determine a mapping relationship, but cannot be directly used for synchronization control.

It should be noted that the sequence number is different from the presentation timestamp PTS (Presentation Timestamp), and cannot be understood as an equivalent technical concept of the presentation timestamp PTS.

In this way, it is assumed that there is a mapping relationship between an $n^{th}$ video frame fetched from the cache queue and the $m^{th}$ audio frame. The following describes how to calculate the play time difference diff. The following calculation is performed based on an audio frame and a video frame that have a mapping relationship. For brevity of description, details are not described again.

Optionally, in a feasible implementation, in some embodiments, the play time difference diff may be determined based on Vpts and m_clock, for example:

$$diff=Vpts-m\_clock$$

Herein, m_clock represents the actual play time of the $m^{th}$ audio frame. Each time an audio frame is played, a timestamp of the played frame is written into the master clock. Vpts is a presentation timestamp of the $n^{th}$ frame fetched from the video cache queue.

Optionally, in another feasible implementation, in some other embodiments, a factor such as post-processing duration may be further introduced to determine the play time difference diff.

For example, diff may be calculated based on the following formula:

$$diff=Vpts-m\_clock+(Y3-X3)$$

Herein, X3 is post-processing duration (second processing duration) corresponding to the video, and Y3 is post-processing duration (first processing duration) corresponding to the audio.

For example, X3 may represent a time corresponding to a process from drawing (draw), rendering (render), composition (compose), to display (display) of one frame of image, namely, total execution duration of a plurality of threads such as drawing, rendering, image frame composition, and image frame display corresponding to the frame of image. The time may be obtained by calculating a time consumed by each thread node. For example, X3=T1+T2+T3+T4, where T1 is drawing duration, T2 is rendering duration, T3 is image frame composition duration, and T4 is image frame display duration. An image frame is a video frame.

In an embodiment in which a video is played through a WMS (Window Manager Service, window manager service), the WMS is configured to provide an image rendering service and the like. X3 may be understood as a time from image drawing, rendering, to final display after an image is sent to the WMS. X3 may be obtained by accessing the WMS.

For example, Y3 may be understood as a time from sending of audio data to an audio framework, passing through an audio driver, to final display, and may be obtained by calculating a time consumed by each thread in an audio play process. Specifically, in an implementation, Y3 may be obtained by accessing the audio framework.

For example, $Y3=T5+T6+T7+T8+T9+T10$, where T6 to T10 sequentially represent duration of mixing processing, sound effect processing, volume processing, sending to the driver, sending to a DSP (Digital Signal Processor, digital signal processor), and play by a speaker.

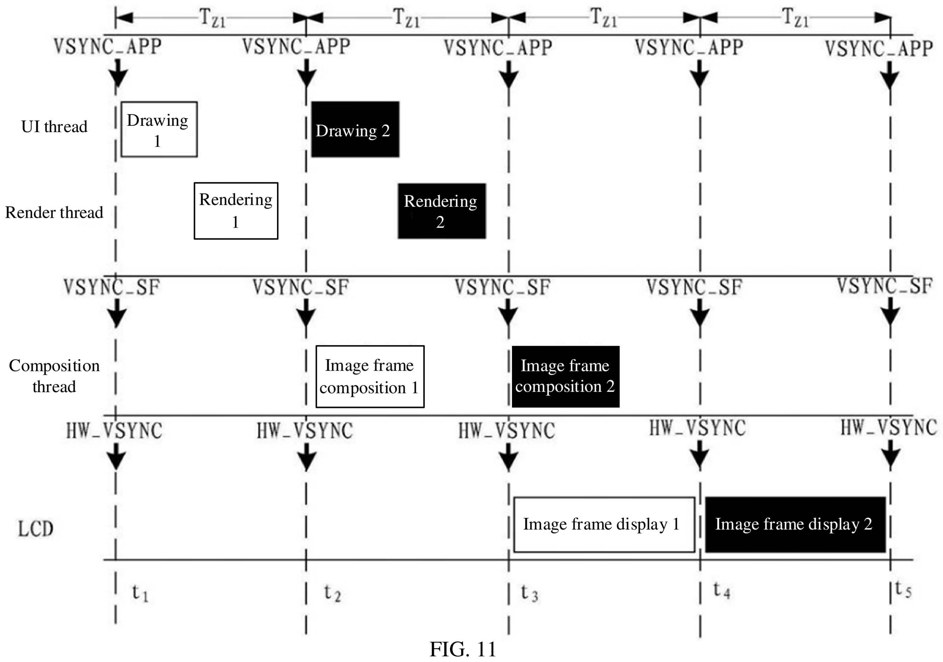

For example, duration of a single thread may be obtained in the following manner: When the thread starts to run, a system time is obtained as a start time. After running of the thread ends, the system time is obtained again at an end of the thread. The time minus the start time is an operation time. A start time is recorded, an end time is recorded, and a program running time is obtained by performing subtraction between the two times. In this embodiment of this application, video and audio post-processing processes may include a plurality of threads. Optionally, a start time at which a first thread performs a corresponding operation may be used as a start time, and a system time is obtained again after execution of a last thread ends. A running time of the plurality of threads may be obtained as the post-processing duration by performing subtraction between the two times. For example, when the drawing thread starts to perform a drawing action, the system time is recorded as the start time, and then the end time is recorded when the image frame starts to be displayed. X3 may be obtained by performing subtraction between the two times. For example, as shown in FIG. 11, $X3=t_3-t_1$.

It should be noted that due to different operating systems and hardware devices, the audio post-processing procedure and the video post-processing procedure may be different. The foregoing is merely an example for description. For example, rendering is not a necessary step in the video post-processing procedure. When a device hardware configuration is strong enough, rendering does not need to be performed. Similarly, sound effect processing, volume processing, and the like are also optional in actual application.

In an application scenario in which a processing procedure is different from the foregoing example, the post-processing duration may be understood as a length of a time period from determining to send the video frame or the audio frame for play to actually playing the video frame or the audio frame. In an implementation, when sending for display is determined, the system time may be recorded and used as the start time, and a play start time is used as the end time, to obtain Y3 or X3.

When it is difficult to determine a time point at which sending for display is determined, the post-processing duration is determined in a more universal manner. A moment at which the video frame or the audio frame is fetched from the cache queue may be used as a start moment, and a moment at which the video frame or the audio frame starts to be actually played may be used as an end moment, to obtain X3 or Y3. That is, the post-processing duration (for example, the first processing duration or the second processing duration) may be an estimated value of processing duration occupied from fetching one data frame from the cache queue to playing the data frame.

It should be noted that Y3 and X3 may be constants determined by performing statistical averaging on a plurality of played video frames or audio frames, and may be written into a program as fixed parameters. In actual running, the post-processing duration does not need to be calculated before all frames are played. For example, in an SRS (simple RTMP Server) 4.0 code architecture, Y3=40 ms. When diff is calculated, Y3 is a fixed constant, namely, 40 ms.

It should be noted that the foregoing implementation of determining X3 and Y3 is merely an example. More generally, X3 may be a time length determined by using a moment at which the video frame is fetched from the cache queue as the start moment and using a moment at which the video frame is played as the end moment, and Y3 may be a time length determined by using a moment at which the audio frame is fetched from the cache queue as the start moment and using a moment at which the audio frame is played as the end moment.

In this embodiment of this application, a timestamp used for calculating diff, for example, Vpts or Apts, may be converted into a time. Because there are different encoding formats and decoding formats, in some encoding/decoding formats, the timestamp Vpts or Apts may be represented by a series of values, is used to notify the play end of a relative play sequence of each frame, and cannot directly represent a time. Therefore, the timestamp needs to be converted into a time, and then diff is calculated by using the foregoing calculation formula.

For example, PTSs of a plurality of video frames in a video are 480, 640, 560, 520, 600, 800, 720, 680, 760, and 960, where the value does not represent a time. In FFmpeg, the PTS needs to be converted into time information based on respective time bases (time_base) of the audio and the video, and then calculation is performed by using the foregoing calculation formula. For example, the play time of the audio frame is $Tv=time\_base*PTS$, where time_base represents a timescale corresponding to a value 1 in the PTS.

After diff is obtained, a play control strategy to be used for the currently fetched video frame is determined based on diff. The play control strategy may include sending for display, waiting, frame discarding, reducing a play rate, increasing a play rate, and the like.

In a process of playing a video and audio together, when a play time difference is within a specific threshold, a human sense does not noticeably perceive asynchronization, and therefore freezing is not noticeable, and audio-visual experience is not degraded. When the play time difference exceeds the specific threshold, noticeable freezing may occur, and audio-visual experience is degraded. In this embodiment of this application, a specific delay may be allowed for synchronous audio and video play, and the delay needs to be within an acceptable range.

In this embodiment of this application, the play control strategy for the current video frame is determined by comparing diff with a predetermined threshold range (a first threshold interval).

For example, min is set as a maximum threshold by which the audio is behind the video, and max is set as a maximum threshold by which the audio is ahead of the video. Optionally, a feasible play control strategy may be as follows:

If diff<min, it indicates that the video frame is faster than the audio frame. In this case, the video frame needs to wait for several milliseconds to wait for the master clock. For example, a waiting time may be (min-diff) milliseconds.

If diff>max, it indicates that the video frame is slower than the audio frame. In this case, the video frame needs to catch up. A catch-up strategy may be to discard the video frame, increase a play rate, or the like.

If min≤diff≤max, it indicates that it is in a synchronization threshold range, no noticeable asynchronization occurs, and the video frame may be directly sent for display.

Optionally, a value of min may be specifically -190 ms to -180 ms, and a value of max may be 85 ms to 95 ms.

The following lists a specific embodiment to describe, by using an example, how to implement synchronous play between different devices at the play end by using the first solution in the one-to-many casting scenario.

With reference to FIG. 10 and FIG. 8, the device B and the device C at the play end respectively feed back to-be-played data type information to the status monitoring module in the device A at the source end through the first status feedback module and the second status feedback module. For example, the data type fed back by the device B is a video, and the data type fed back by the device C is audio.

The status monitoring module in the device A inputs the data type information into the synchronization strategy management module, and the synchronization strategy management module selects a corresponding synchronization strategy from the strategy library based on the data type information.

In an actual distributed service scenario, data type combinations are diversified because a quantity of devices at the play end and a quantity of devices at the source end increase. The synchronization strategy management module is disposed, so that different synchronization strategies may be selected for different data types. Therefore, applicability to a more complex application scenario can be implemented.

Optionally, when data types on a plurality of transmission channels include at least one channel of audio and at least one channel of video, one channel of audio is used as a master, and the other channels are used as slaves. For example, when current to-be-played data types are that one channel is audio and the other channel is a video, a used synchronization strategy is masterslave setting. The audio is set to a master, the video is set to a slave, and for the video, a play time of the audio is used as a reference to perform frame rate control.

Optionally, when data types on a plurality of transmission channels include a plurality of channels of data of a same type, for example, both of two channels of data are videos or both of two channels of data are audio, any one channel may be selected as a master, which is equivalent to that any one of devices at the play end is selected as a master, and the other devices are slaves.

Optionally, when there are a plurality of devices at the play end, after a fixed quantity of audio frames are cached, the audio frame is automatically played, and the video and the audio do not wait for each other. In this embodiment, a cache time of the audio frame may be set to be greater than that in a single-device scenario, that is, greater than a cache time in a one-to-one casting application scenario. For example, if a cache time is 2 minutes when there is a single device at the play end, a cache time of the data cache module in the one-to-many casting scenario is set to be greater than 2 minutes.

After the synchronization strategy is determined, the multi-channel management module monitors actual play time information m_clock sent by the delay feedback module in the device C, and forwards the actual play time information to the frame rate control module in the device B as an input to video play frame rate control.

In this embodiment, a video frame rate is 30 frames/s. The frame rate control module fetches a frame of image corresponding to the current audio frame from a cache queue every 33 ms, reads a presentation timestamp Vpts of the frame of image, for example, reads a presentation timestamp Vpts of an $m^{th}$ video frame from the cache queue, and then calculates diff based on the following formula:

$$diff = Vpts - m\_clock + (Y3 - X3)$$

After the play time difference diff is calculated, diff is compared with a predetermined threshold range to determine whether to send the current video frame for display.

A higher frequency of fetching an image from the cache queue indicates higher synchronization control accuracy. The synchronization control accuracy may be improved when diff is calculated frame by frame. A smaller value of diff indicates a lower relative delay and a better synchronization effect. The synchronization accuracy may be controlled by controlling the frequency of fetching an image frame from the cache queue. Interframe synchronization may be implemented when diff is less than an interframe interval or even close to 0.

In this embodiment, a value of min is -185 ms, and a value of max is 90 ms.

If diff<min, the video frame waits. For example, if diff is -205 ms, the video frame waits for -185 ms-(-205) ms=20 ms, and then is sent for display.

If -185 ms≤diff≤90 ms, the video frame is directly sent for display. Sending for display means to transfer a fetched frame of image to a display driver for display on a display.

If diff>90 ms, the video needs to catch up with the audio. In this case, the used control strategy may be to discard a frame or increase a video play rate.

Optionally, to ensure continuous data play and avoid a problem of audio dropout or picture jump, the frame discarding manner is not used for synchronization as much as possible, and the play rate change manner may be considered for synchronization.

For example, optionally, if an arrival time of the video frame is excessively late (greater than 90 ms) and a delayed frame arrives simultaneously, frame discarding may be performed and a next frame may be directly displayed. Alternatively, if an advance time of the video frame exceeds 185 ms, next scheduling is waited for, but a buffer area may be full, frame discarding needs to be performed, and a P-frame (predictive frame, predictive frame) and a B-frame (bi-directional interpolated prediction frame, bi-directional interpolated prediction frame) are preferentially discarded.

When there is a delay in arrival of the audio frame or the audio is played slowly, the video frame is allowed to be displayed in advance. A maximum advance margin of the video is 185 ms.

Alternatively, optionally, an arrival time of the audio is excessively late, and all audio frames in the queue are sent. In this case, sound discontinuity inevitably occurs. To ensure user experience and avoid sound discontinuity, when a data volume in the audio queue is less than a specific value, an audio play rate is reduced and a waiting time of the audio frame is increased. When a sent queue exceeds a specific value, a normal play speed is resumed and frame discarding processing is not performed as much as possible. Slow play is performed without noticeably affecting perception by a user. A specific slow play rate is determined based on a specific value of diff.

Frame discarding processing causes information loss. Therefore, compared with the frame discarding processing manner, the fast or slow play manner used to implement synchronization may retain more information and reduce data loss. However, in some cases, only frame discarding processing can be performed.

Optionally, if the audio cache queue is full, and a first video frame still does not arrive, only frame discarding processing can be performed on the audio frame, or a casting failure is returned.

In the foregoing solution, an actual play time on the audio play device at the play end is used as a reference to control a play time on another device such as the video play device. The following describes the other solution for implementing synchronous play between a plurality of devices in the one-to-many casting application scenario.

During synchronization of a video frame with an audio frame, the video play device needs to accurately know a play time of the audio frame, to adjust a play occasion of the video play device. If there is a single device at the play end, the video play module may easily obtain audio play time information of the same device. However, in a scenario in which audio and a video are separated, the video play device cannot obtain the play time of the audio frame in real time. If the play time of the audio frame is obtained across devices for the video frame, cross-device forwarding needs to be performed two times through the source end. This causes a high delay and is unreliable. In the foregoing first solution, the source end needs to perform forwarding one time. In the second solution in the one-to-many scenario provided in embodiments of this application, the source end does not need to perform forwarding, but the audio play device feeds back a delay to the source end, and the source end does not need to feed back the delay to the video play device.

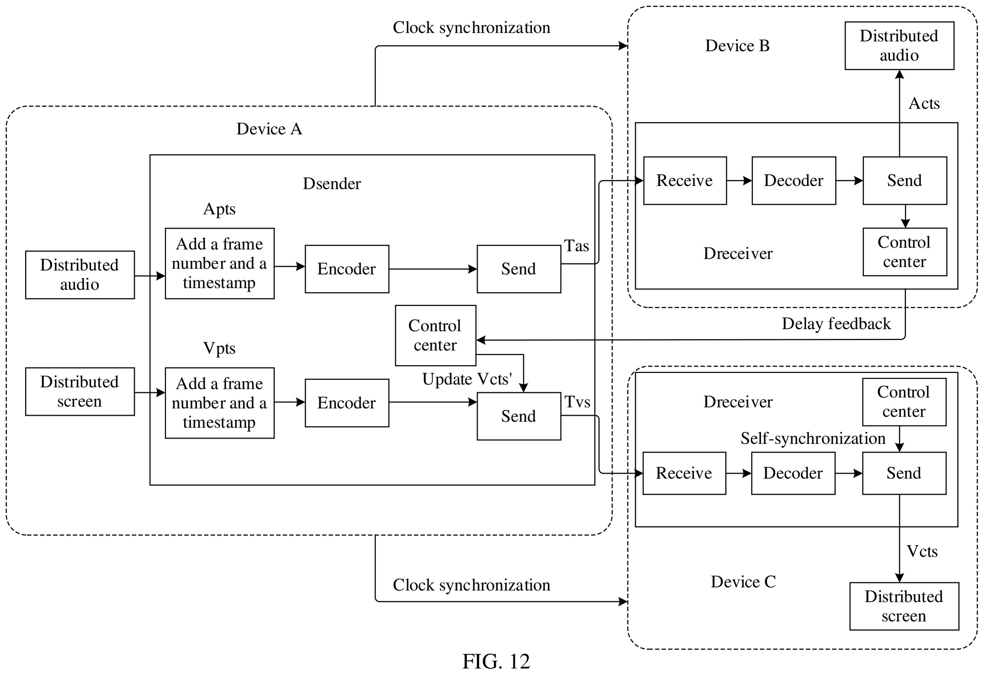

Specifically, the system architecture shown in FIG. 7 is also used as an example for description. The solution may be implemented based on control centers deployed at the source end and the device at the play end. Specifically, as shown in FIG. 12, for clarity of description, a first control center is deployed in the device A at the source end, a second control center is deployed in the audio play device C, and a third control center is deployed in the video play device B.

Clock synchronization needs to be first performed between the devices A, B, and C.

Clock synchronization is first performed to offset or reduce asynchronization caused by different clocks of the devices.

The audio play device (the device C) determines delay information of an audio frame, and feeds back the delay information to the device A. The delay information may be a transmission delay and a decoding delay of a previous played audio frame, or an average transmission delay and decoding delay that are of a plurality of played audio frames and that are obtained through statistics collection, and is fed back to the first control center in the device A at the source end.

In the device A at the source end, before a video stream is encoded, a sequence number and a presentation timestamp Vpts are added for each frame. After encoding by an encoder, the first control center estimates a play time of the video frame based on the delay information of the audio frame, to obtain an estimated play time Vcts' of the video frame, and replaces the raw presentation timestamp Vpts with the estimated play time, to offset a delay difference between the video frame and the audio frame, so as to implement synchronous play.

It should be noted that a video presentation timestamp Vpts or an audio presentation timestamp Apts is used to direct the play end to perform sequential play in a time sequence indicated by the timestamp, is generated by the device at the source end, and is usually added by the device at the source end to each frame of data before encoding or during encoding.

The first control center first calculates Vcts' with reference to the delay information fed back by the second control center, and then updates a presentation timestamp of each video frame in the to-be-transmitted video stream to Vcts' before the video stream is sent.

The following lists a specific embodiment to provide detailed descriptions.

When there is a single device at the play end, during synchronization of a video with audio of the same device, a sending for display time Acts of the audio may be obtained. However, when audio and a video are played on different devices, the video play device cannot obtain Acts on the audio play device. The sending for display time Acts of the audio may be understood as an estimated value of a play time.

In a distributed scenario, clock synchronization needs to be first performed between a plurality of devices. The device A at the source end respectively transmits to-be-transmitted video data and audio data to the device B and the device C at the play end.

After a specific quantity of audio frames are cached, the audio frame is played based on a specified frame rate.

In some embodiments, the audio play device C determines delay information Tasd, and then feeds back the delay information to the device A.

When other negligible factors are ignored, there is the following relationship between an audio transmission and decoding delay Tasd, an audio play time Acts, and an audio sending time:

$$\text{Tasd} = \text{Acts} - \text{Tas}$$

When the video play device at the play end cannot learn of Acts, the device A at the source end may obtain a sending time point Tas of the audio frame at the source end, and then may obtain an estimated value of Acts based on Tas and Tasd:

$$\text{Acts} = \text{Tas} + \text{Tasd}$$

Acts is the play time of the audio frame estimated by the source end, Tas is the sending time of the audio frame at the source end, and Tasd is the transmission delay of the audio frame.

For example, in this embodiment, the transmission delay Tasd of the audio frame includes a transmission delay and a decoding delay. An average value may be calculated by using a sum of transmission delays and decoding delays of a plurality of audio frames played by the audio play device in a time period.

In another embodiment, the audio play device may not need to feed back the delay information to the device at the source end, but obtains Tas after determining the delay Tasd. Then, Acts is calculated on the audio play device C, and then the device C directly feeds back Acts to the device A.

Tasd is a historical result, and may not be completely consistent with a delay generated in an actual network status. Therefore, reliability is not 100%. Consequently, there may be a specific error during audio-visual synchronization. Optionally, the device at the source end may perform filtering processing, and filter Tasd of a plurality of obtained audio frames to obtain the smoothest value, so as to reduce a large error caused by local fluctuation.

A play time difference between a video frame and an audio frame that have a mapping relationship may be calculated by using the following formula:

$$\text{diff} = (\text{Vcts} - \text{Acts}) - (\text{Vpts} - \text{Apts})$$

Vcts is a sending for display time of the video frame, and may be understood as an estimated value of a play time of the video frame. Apts and Vpts are respectively presentation timestamps respectively added by the device A to the audio and the video before encoding.

That there is a mapping relationship means that the video frame and the audio frame have a same or similar sequence number. Alternatively, it may be determined, based on the presentation timestamps, that the two frames are an audio frame and a video frame played in a same time sequence. Correspondingly, there is a mapping relationship between the audio frame and the video frame.

An objective of synchronous play is min≤diff≤max. In this embodiment, a value of min is -186 ms, and a value of max is 88 ms.

Sending times that are of the current audio frame and video frame and that are obtained by the device A at the source end are respectively Tas and Tvs.

When an error introduced by current frame information is ignored, Acts=Tas+Tasd. If it is substituted into the foregoing calculation formula, the objective of synchronous play is as follows:

$$\min \leq \text{Vcts} - (\text{Tas} + \text{Tasd}) - (\text{Vpts} - \text{Apts}) \leq \max$$

If diff=0, Vcts=Vcts', that is, Vcts'-(Tas+Tasd)-(Vpts-Apts)=0 ms. In this case, there is the following:

$$Vcts'=Tas+Tasd+Vpts-Apts$$

Apts and Vpts may be obtained by the device A at the source end.

Vcts' is an estimated video play time when diff=0.

In some embodiments, before the device A sends the video frame, the presentation timestamp Vpts of the current frame may be updated to Vcts'.

In some other embodiments, before the device A sends the video frame, Vcts' may be added on the basis of the raw presentation timestamp Vpts, to add an estimated value instead of replacing original Vpts. This can avoid a series of problems caused by deletion of original Vpts.

After decoding, the video play device (the device B) at the play end only needs to compare Vcts' with a current time to determine whether to send the frame for display. For example, the current time is Tn, and diff=Vcts'-Tn. Then, a corresponding processing strategy may be obtained by comparing diff' with [-186 ms, 88 ms]. For details, refer to the foregoing embodiment. Details are not described herein again.

Optionally, in the second solution, X3 and Y3 may be introduced to determine the play time difference. A corresponding calculation formula is as follows:

$$diff=(Vcts-Acts)-(Vpts-Apts)+(Y3-X3)$$

In this case, there is the following:

$$Vcts'=Tas+Tasd+Vpts-Apts+(X3-Y3)$$

Similarly, in this embodiment, when there are a plurality of devices at the play end, after a fixed quantity of audio frames are cached, the audio frame is automatically played, and the video and the audio do not wait for each other. A cache time may be set to be greater than that in a single-device scenario.

In the foregoing descriptions, an example in which at least one channel is audio and at least one channel is a video is mainly used for description. A person skilled in the art may adaptively obtain, based on the foregoing descriptions, a solution in a case in which all of a plurality of channels of to-be-transmitted data are audio or all of a plurality of channels of to-be-transmitted data are videos in the one-to-many casting scenario. For example, as shown in FIG. 4(d), in an application scenario in which both of two channels of data are images, a play time on a play device of one channel of image may be used as a reference to control a play time on the other device. For example, based on the foregoing first solution, an actual play time of each image frame on the device C is used as a reference time to control a play time of a corresponding image frame on the device B. Alternatively, based on the foregoing second solution, a play time of an image frame on the device B is estimated based on a transmission and decoding delay of the device C, and a presentation timestamp is updated to control the play time of the image on the device B, so as to implement synchronization between the device B and the device C. By analogy, for the case shown in FIG. 4(e), a corresponding solution may also be adaptively obtained. Details are not described in this specification of this application.

The foregoing describes the synchronous play control solution in the one-to-many scenario. The following continues to describe a synchronous play control solution in the many-to-one scenario.

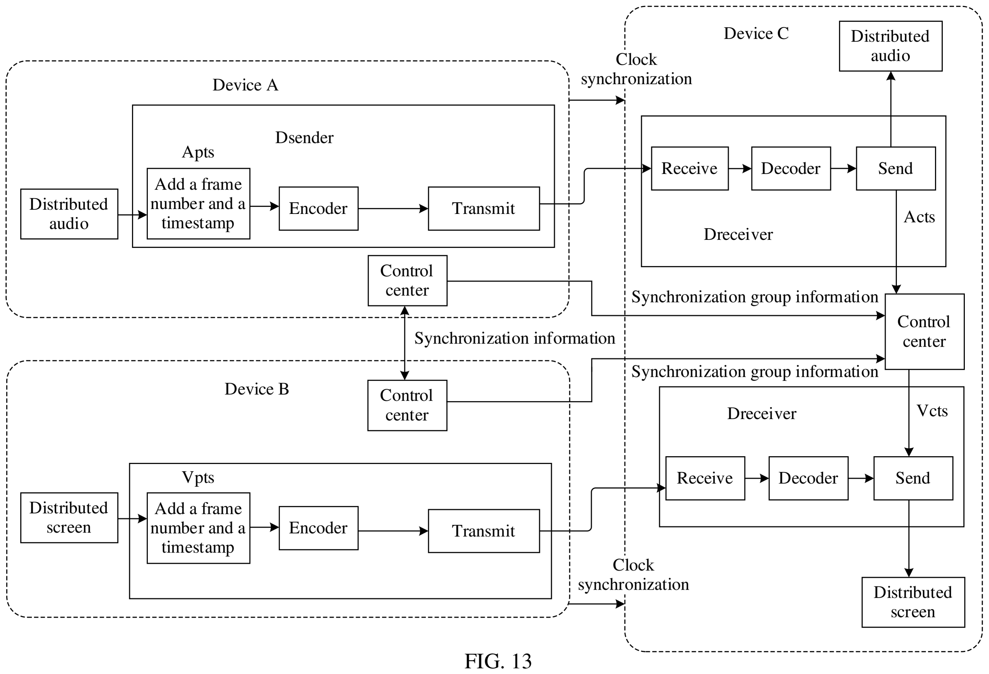

In a scenario in which there are a plurality of devices at the source end and there is a single device at the play end, for example, in FIG. 13, a device A sends audio, a device B sends a video, and there is only a device C at the play end. A video receiver in the device C may accurately obtain a play time of the audio. However, the source end is located on two devices, and synchronization information between the devices cannot be conveniently obtained, and cross-device interaction needs to be performed.

In the many-to-one scenario, in an audio-visual synchronization procedure, a distributed hardware framework needs to first set synchronization group information, then the synchronization group information is synchronized between a plurality of devices through a control center, and then data transmission and play are performed.

Clock synchronization needs to be performed first between the three devices, that is, the device A and the device B jointly synchronize with the device C. After clock synchronization, Apts and Vpts are added to frame header information of the device A and the device B.

A timestamp is added after clock synchronization, to reduce asynchronization caused by clock inconsistency of the devices.

Whether audio and a video on different devices need to be synchronized cannot be determined by each device individually, and needs to be set at a service layer.

A control center is disposed at the service layer, and an interface is reserved in each of control centers respectively corresponding to the device A, the device B, and the device C. The interface is configured to receive synchronization group information. The synchronization group information may include at least one of synchronization reference information and stream information.

Optionally, the synchronization reference information may include identity information of each device at the source end and a device at a destination end (the play end), for example, include identity information of the device A and the device B at the source end and identity information of the device C at the play end.

The identity information may be a code, a symbol, or the like that can uniquely identify a device identity.

For example, the identity information may be a device ID of a device. For example, a device ID of a mobile phone is an IMEI (International Mobile Equipment Identity, international mobile equipment identity) code of the mobile phone.

Optionally, the stream information may include currently transmitted data type information, for example, whether a currently transmitted data type is audio or a video.

After the source end generates the synchronization group information, at least two devices at the source end set the synchronization group information in local control centers, and the device at the source end synchronizes the synchronization group information to a control center in the device at the play end.

Herein, synchronization of synchronization group information between a plurality of devices at the source end and the device at the play end can be implemented. There is no clear limitation on a time sequence between synchronization between the devices at the source end and synchronization between the source end and the play end.

Then, the device at the play end selects, based on identity information of a device at a receive end (the play end) in the synchronization group information, data content consistent with identity information of the device at the play end for retention, obtains, through filtering, a data type sent by each device, determines a data type sent by each device at the source end, groups different devices at the source end based on the data type, and then performs audio-visual synchronization.

The following lists a specific embodiment in the many-to-one casting scenario.

For example, in a distributed service scenario, an interface SetSyncGroup(vector<pair<deviceIDs, streamInfo>>) is reserved in a control center of each device at the source end and the play end, to receive synchronization group information.

Optionally, the synchronization group information may be set in a frame header.

A first vector member is synchronization reference, and is used to notify the control center of a device ID of a current transmit end (namely, the source end) and a device ID of the play end after the device ID of the source end and the device ID of the play end are determined.

A second member is stream information, and is used to notify the control center of whether a currently sent data type is audio data or video data.

Then, the device A and the device B set the synchronization group information in local control centers, and then the device A and the device B synchronize the synchronization group information to a control center in the device C.

Synchronization of the synchronization group information enables a plurality of devices at the source end to interact with each other before the plurality of devices at the source end send data, so as to learn of information such as a data type that needs to be sent by each other, and establish a mapping relationship between an audio frame and a video frame. In addition, through synchronization of the synchronization group information with the device at the play end, the device at the play end can implement synchronization between the audio frame and the image frame.

The device C identifies a device ID of a receive end (the play end) based on the synchronization reference information in the synchronization group information, and if the device ID is consistent with a device ID of the device C, determines that the data is data for receiving by the device C and retains the data.

The device C obtains, through filtering based on the stream information in the synchronization group information, the data type sent by each device. For example, as shown in FIG. 13, the device C determines that the device A sends audio data and the device B sends video data, then groups the device A and the device B, and performs audio-visual synchronization between the two devices.

Optionally, because the receive end includes only the device C, the device C may directly obtain Acts. In this case, processing in which the audio data is used as a reference for the video data continues to be performed based on $min \leq Vcts-Acts-(Vpts-Apts) \leq max$.

Similar to the one-to-many casting scenario, a person skilled in the art may adaptively obtain, based on the foregoing descriptions, a solution in a case in which all of a plurality of channels of to-be-transmitted data are audio or all of a plurality of channels of to-be-transmitted data are videos in the many-to-one casting scenario. Details are not described in this specification of this application.

According to the implementation solutions in the one-to-many scenario and the many-to-one scenario, an implementation solution in a many-to-many scenario may be adaptively obtained. For example, when there are a plurality of devices at the source end and there are a plurality of devices at the play end, a sending time difference $\Delta t$ between the plurality of devices at the source end may be determined first, and $\Delta t$ is introduced for correction when diff is calculated or when a play time of a video frame is estimated, to offset or reduce impact of sending time asynchronization between the devices at the source end on the play end.

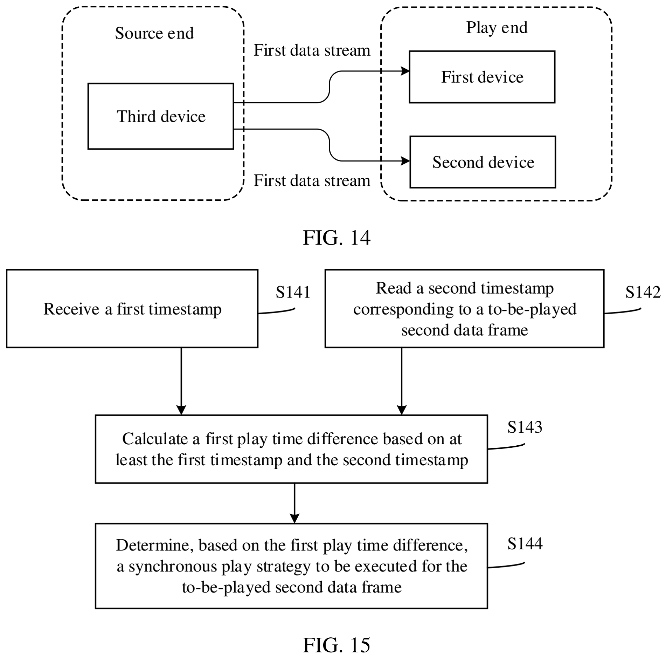

Based on the descriptions of the foregoing embodiments, it may be learned that embodiments of this application provide a synchronous play method in a distributed service scenario. The method may be applied to a one-to-many casting scenario. As shown in FIG. 14, in the one-to-many casting scenario, a play end includes at least two devices, the at least two devices include a first device and a second device, and a source end includes a third device. The third device transmits a first data stream to the first device for play, and transmits a second data stream to the second device for play. The first data stream includes a plurality of first data frames, and the second data stream includes a plurality of second data frames.

As shown in FIG. 15, when descriptions are provided from a perspective of the second device, the method includes the following procedure.

S141: Receive a first timestamp.

S142: Read a second timestamp corresponding to a to-be-played second data frame.

It should be noted that the step numbers are merely used to distinguish between different steps, and are not used to limit an execution sequence. For example, there is no clear limitation on an execution time sequence between S141 and S142. In actual application, S142 may be performed before S141.

S143: Calculate a first play time difference based on at least the first timestamp and the second timestamp.

S144: Determine, based on the first play time difference, a synchronous play strategy to be executed for the to-be-played second data frame.

It should be noted that the first timestamp represents an actual play time of an $m^{th}$ first data frame on the first device, where m is greater than or equal to 1 and is an integer; and the second timestamp is a presentation timestamp PTS generated by the third device at the source end, and represents a play time sequence of each second data frame in the second data stream.

It may be learned, based on the foregoing descriptions, that the first data stream and the second data stream may be data of a same type, or may be data of different types. For example, the first data stream may be an audio data stream, and the second data stream may be a video data stream. Alternatively, both the first data stream and the second data stream may be video data streams. For example, the first data stream and the second data stream are respectively different parts of an image. Alternatively, both the first data stream and the second data stream are audio data streams. For example, the first data stream is left-channel data, and the second data stream is right-channel data.

In addition, there may be three or more devices at the play end, and a quantity of data streams is not limited to two. For a manner of processing at least three data streams, refer to a manner of processing two data streams. For example, in a case of two data streams, if the first data stream is used as a reference for the second data stream, for a plurality of data streams including at least three data streams, a play time of the first data stream may be used as a reference for all other data streams than the first data stream.

Optionally, receiving the first timestamp may be: receiving the first timestamp forwarded by the third device. The first timestamp is generated by the first device and sent to the third device. Compared with a manner in which a data link is established between the second device and the first device or forwarding is performed two times through a device at the source end, the manner in which forwarding is performed one time through the third device can reduce link communication pressure and save communication resources.

Optionally, reading the second timestamp corresponding to the to-be-played second data frame may be: at a predetermined time interval, fetching a next to-be-played second data frame from a cache queue, and reading a second timestamp. For the predetermined time interval, refer to the descriptions in the foregoing embodiment. The time interval should be determined based on a frame rate, and is a multiple of an inverse proportion of the frame rate.

Optionally, calculating the first play time difference based on at least the first timestamp and the second timestamp may be: when it is determined that there is a mapping relationship between the next to-be-played second data frame and the $m^{th}$ first data frame, calculating the first play time difference based on at least the first timestamp corresponding to the $m^{th}$ first data frame and the second timestamp corresponding to the next to-be-played second data frame.

Optionally, calculating the first play time difference based on at least the first timestamp and the second timestamp may alternatively be: calculating the first play time difference based on the first timestamp, the second timestamp, first processing duration, and second processing duration. The first processing duration is an estimated value of processing duration occupied from fetching one first data frame from the cache queue to playing the first data frame, and the second processing duration is an estimated value of processing duration occupied from fetching one second data frame from the cache queue to playing the second data frame.

Optionally, the synchronous play strategy includes at least one of waiting, sending for display, and catching up. Determining, based on the first play time difference, the synchronous play strategy to be executed for the to-be-played second data frame may be: comparing the first play time difference with a predetermined first threshold interval; and when the first play time difference is less than a minimum value of the threshold interval, determining that play of the first data stream is behind that of the second data stream, and determining that the synchronous play strategy to be executed for the to-be-played second data frame is waiting; or when the first play time difference is greater than a maximum value of the threshold interval, determining that play of the first data stream is ahead of that of the second data stream, and determining that the synchronous play strategy to be executed for the to-be-played second data frame is catching up; or when the first play time difference is within the threshold interval, determining that play of the first data stream is synchronous with that of the second data stream, and determining that the synchronous play strategy to be executed for the to-be-played second data frame is sending for display.

Optionally, waiting includes one or more of reducing a play rate, waiting for first predetermined duration, and discarding a frame, where the first predetermined duration is determined based on a difference between the minimum value of the threshold interval and the first play time difference; and catching up includes increasing a play rate and/or discarding a frame.

An embodiment of this application further provides a synchronous play method in a distributed service scenario. The method may be applied to a one-to-many casting scenario. For descriptions of the one-to-many casting scenario, refer to the foregoing descriptions. Details are not described herein again.

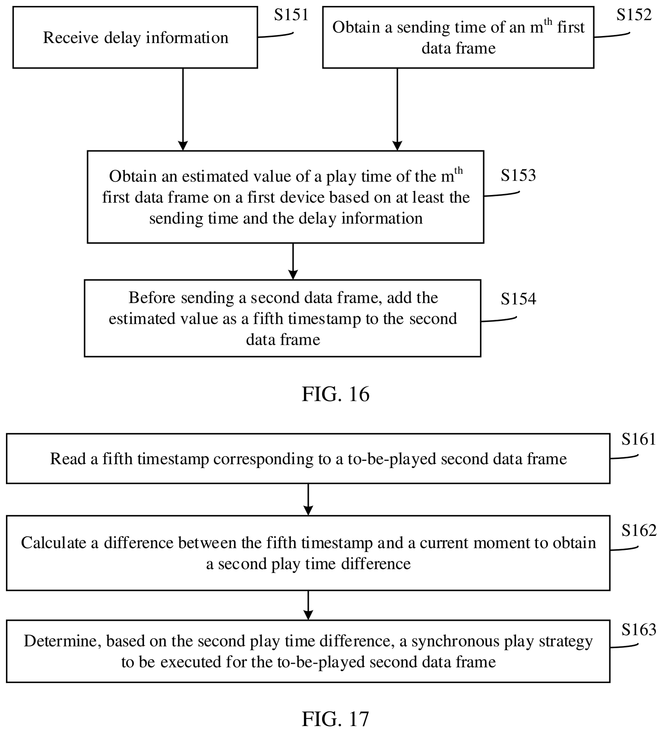

The method may be performed based on a third device. With reference to FIG. 16, a specific procedure may be as follows:

S151: Receive delay information.
The delay information includes a transmission delay and a decoding delay. The transmission delay represents duration for transmitting an $m^{th}$ first data frame from the third device to a first device, the decoding delay is decoding duration occupied for the $m^{th}$ first data frame, and m is greater than or equal to 1 and is an integer.
S152: Obtain a sending time of the $m^{th}$ first data frame.
S153: Obtain an estimated value of a play time of the $m^{th}$ first data frame on the first device based on at least the sending time and the delay information.
S154: Before sending a second data frame, add the estimated value as a fifth timestamp to the second data frame.

The fifth timestamp is used to calculate a difference from a current moment to obtain a second play time difference, so as to determine a synchronous play strategy to be executed for the to-be-played second data frame.

Adding the fifth timestamp to the second data frame may be: replacing a raw video presentation timestamp Vpts with the fifth timestamp, or may be: not replacing a raw presentation timestamp, but additionally adding the fifth timestamp.

In this embodiment of this application, the step numbers are merely used to distinguish between different steps, and do not represent a limitation on an execution time sequence.

Optionally, obtaining the estimated value of the play time of the first data frame on the first device based on at least the sending time and the delay information may be: obtaining the estimated value of the play time of the $m^{th}$ first data frame on the first device based on at least the sending time of the $m^{th}$ first data frame and the delay information, where m is greater than or equal to 1 and is an integer, and a mapping relationship is determined based on a sequence number and/or a presentation timestamp PTS; and adding the estimated value as the fifth timestamp to the second data frame may be: adding the estimated value as the fifth timestamp to a second data frame that has a mapping relationship with the $m^{th}$ first data frame.

Optionally, obtaining the estimated value of the play time of the first data frame on the first device based on at least the sending time and the delay information may be: obtaining the estimated value of the play time of the first data frame on the first device based on the sending time, the delay information, a third timestamp, and a fourth timestamp. The third timestamp is a presentation timestamp PTS added for the first data frame, and represents a play time sequence of each first data frame in a first data stream. The fourth timestamp is a presentation timestamp PTS added for the second data frame, and represents a play time sequence of each second data frame in a second data stream.

An embodiment of this application further provides a synchronous play method in a distributed service scenario. The method is applied to a one-to-many casting scenario. The method may be performed based on a second device. As shown in FIG. 17, the method may include the following procedure.

S161: Read a fifth timestamp corresponding to a to-be-played second data frame.

The fifth timestamp is an estimated value of a play time of a first data frame on a first device, and is obtained based on at least a sending time and delay information. The delay information includes a transmission delay and a decoding delay. The transmission delay represents duration for transmitting the first data frame from a third device to the first device, the decoding delay is decoding duration occupied for one first data frame, and the sending time is a time for sending the first data frame by the third device.

S162: Calculate a difference between the fifth timestamp and a current moment to obtain a second play time difference.

S163: Determine, based on the second play time difference, a synchronous play strategy to be executed for the to-be-played second data frame.

Optionally, the synchronous play strategy includes at least one of waiting, sending for display, and catching up. For a specific synchronous play strategy, refer to the foregoing descriptions. Details are not described herein again.

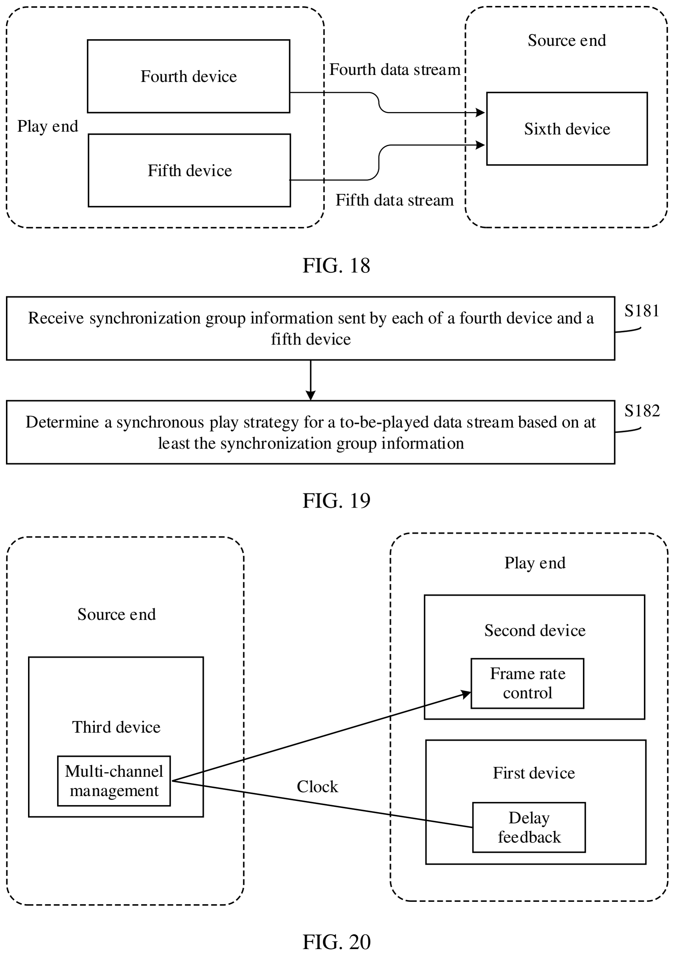

An embodiment of this application further provides a synchronous play method in a distributed service scenario, applied to a many-to-one casting scenario. With reference to the foregoing descriptions of the many-to-one casting scenario, as shown in FIG. 18, in the many-to-one casting scenario, a source end includes at least two devices, the at least two devices include a fourth device and a fifth device, and a play end includes a sixth device. The fourth device and the fifth device respectively transmit a fourth data stream and a fifth data stream to the sixth device for play. A control center is disposed in each of the fourth device, the fifth device, and the sixth device, and an interface is reserved in the control center to set synchronization group information.

The method may be performed based on the sixth device. As shown in FIG. 19, the method may include the following procedure.

S181: Receive synchronization group information sent by each of the fourth device and the fifth device.

The synchronization group information includes synchronization reference information and stream information. The synchronization reference information includes identity information of a device at the source end and identity information of a device at the play end. The stream information includes data type information of a data stream sent by each device at the source end.

S182: Determine a synchronous play strategy for a to-be-played data stream based on at least the synchronization group information.

For specific implementation, refer to the embodiment descriptions in the foregoing corresponding scenario. Details are not described herein again.

An embodiment of this application further provides a play device in a distributed service scenario. The play device serves as a second device, and is applied to a one-to-many casting scenario. In the one-to-many casting scenario, the second device shown in FIG. 20 includes a frame rate control module, configured to perform the following operations:

receiving a first timestamp, reading a second timestamp corresponding to a to-be-played second data frame, calculating a first play time difference based on at least the first timestamp and the second timestamp, and determining, based on the first play time difference, a synchronous play strategy to be executed for the to-be-played second data frame.

Optionally, the second device further includes a second status feedback module and/or a second data cache module. The second status feedback module is at least configured to: identify a data type of the to-be-played second data frame, and feed back the data type to a third device. The second data cache module is at least configured to cache at least one second data frame in a second data stream.

An embodiment of this application further provides a play device in a distributed service scenario. The play device serves as a first device, and is applied to a one-to-many casting scenario. In the one-to-many casting scenario, the first device shown in FIG. 20 includes a delay feedback module, configured to perform the following operations:

obtaining a first timestamp, and sending the first timestamp to a third device.

The first timestamp represents an actual play time of an $m^{th}$ first data frame on the first device. The first timestamp is used to calculate a first play time difference with a second timestamp, so as to determine, based on the first play time difference, a synchronous play strategy to be executed for a to-be-played second data frame. The second timestamp represents a play time sequence of each second data frame in a second data stream.

Optionally, the first device further includes a first status feedback module and/or a first data cache module. The first status feedback module is at least configured to:

identify a data type of a to-be-played first data frame, and feed back the data type to the third device. The first data cache module is at least configured to cache at least one first data frame in a first data stream.

An embodiment of this application further provides a device at a source end in a distributed service scenario. The device at the source end serves as a third device, and is applied to a one-to-many casting scenario. The third device shown in FIG. 20 includes a multi-channel management module, configured to perform the following operations:

receiving a first timestamp, and forwarding the first timestamp to a second device, where the first timestamp is obtained and sent by a first device.

Optionally, the third device further includes a synchronization strategy management module and/or a status monitoring module. The status monitoring module is configured to: receive a respective data type fed back by each of at least two devices, and input the data type into the synchronization strategy management module. The synchronization strategy management module is configured to determine a synchronization management strategy based on the respective data type fed back by each of the at least two devices.

An embodiment of this application further provides a play system in a distributed service scenario. As shown in FIG. 20, the play system is applied to a one-to-many casting scenario. A first device includes a delay feedback module, configured to: obtain a first timestamp, and send the first timestamp to a third device. The third device includes a multi-channel management module, configured to: receive the first timestamp, and forward the first timestamp to a second device. The second device includes a frame rate control module, configured to: receive the first timestamp, read a second timestamp corresponding to a to-be-played second data frame, calculate a first play time difference based on at least the first timestamp and the second timestamp, and determine, based on the first play time difference, a synchronous play strategy to be executed for the to-be-played second data frame.

An embodiment of this application further provides a play system in a distributed service scenario. The play system is applied to a one-to-many casting scenario. A first device is configured to determine delay information. The delay information includes a transmission delay and a decoding delay. The transmission delay represents duration for transmitting a first data frame from a third device to the first device. The decoding delay is decoding duration occupied for one first data frame. The third device is configured to: receive the delay information; obtain a sending time of the first data frame; obtain an estimated value of a play time of the first data frame on the first device based on at least the sending time and the delay information; and before sending a second data frame, add the estimated value as a fifth timestamp to the second data frame. A second device is configured to: read the fifth timestamp of the to-be-played second data frame; calculate a difference between the fifth timestamp and a current moment to obtain a second play time difference; and determine, based on the second play time difference, a synchronous play strategy to be executed for the to-be-played second data frame.

An embodiment of this application further provides a play system in a distributed service scenario. The play system is applied to a many-to-one casting scenario. As shown in FIG. 18, in the many-to-one casting scenario, a source end includes at least two devices, the at least two devices include a fourth device and a fifth device, and a play end includes a sixth device. The fourth device and the fifth device respectively transmit a fourth data stream and a fifth data stream to the sixth device for play. A control center is disposed in each of the fourth device, the fifth device, and the sixth device, and an interface is reserved in the control center to set synchronization group information. Each of the fourth device and the fifth device is configured to: set synchronization group information in a local control center, and send the synchronization group information that is set to the sixth device. The synchronization group information includes synchronization reference information and stream information. The synchronization reference information includes identity information of a device at the source end and identity information of a device at the play end. The stream information includes data type information of a data stream sent by each device at the source end. The sixth device is configured to: receive the synchronization group information sent by each of the fourth device and the fifth device, and determine a synchronous play strategy for a to-be-played data stream based on at least the synchronization group information.

An embodiment of this application further provides an electronic device. The electronic device includes one or more processors, a memory, at least one application, and one or more computer programs. The one or more computer programs are stored in the memory, and the one or more computer programs include instructions. When the instructions are executed by the electronic device, the electronic device is enabled to perform the method in any one of the foregoing embodiments.

An embodiment of this application further provides a storage medium, including computer instructions. When the computer instructions are run on an electronic device, the electronic device is enabled to perform the method in any one of the foregoing embodiments.

An embodiment of this application further provides a chip system, including: a communication interface, configured to input and/or output data; and a processor, configured to execute a computer-executable program, to enable a device in which the chip system is installed to perform the method in any one of the foregoing embodiments.

It should be noted that the solutions provided in embodiments of this application include any one or more of the synchronous play system and method, the electronic device, the storage medium, and the chip system, or may be a software product, a hardware product, a virtual service product, or the like in another form that is obtained based on a technical concept of the method described in this specification of this application.

In the descriptions of the apparatus in embodiments of this application, various modules configured to implement method procedure functions are constructed in the apparatus. Division into the modules is merely logical function division. When embodiments of this application are implemented, functions of the modules may be implemented in one or more pieces of software and/or hardware.

Specifically, during actual implementation, all or some of the functional modules may be integrated into one physical entity, or may be physically separated. In addition, all of the modules may be implemented in a form of software invoked by a processing element, or may be implemented in a form of hardware; or some modules may be implemented in a form of software invoked by a processing element, and some modules may be implemented in a form of hardware. For example, the detection module may be an independently disposed processing element, or may be integrated in a chip of the electronic device for implementation. Implementation of other modules is similar to this. In addition, all or some of the modules may be integrated together, or may be implemented independently. In an implementation process, the steps in the foregoing method or the foregoing modules may be completed through an integrated logic circuit of hardware in a processor element, or by using instructions in a form of software.

For example, the foregoing modules may be configured as one or more integrated circuits for implementing the foregoing method, for example, one or more application-specific integrated circuits (Application-Specific Integrated Circuits, ASICs), one or more digital signal processors (Digital Signal Processors, DSPs), or one or more field programmable gate arrays (Field Programmable Gate Arrays, FPGAs). For another example, these modules may be integrated together and implemented in a form of a system-on-a-chip (System-On-a-Chip, SoC).

Specifically, in an embodiment of this application, the one or more computer programs are stored in the memory, and the one or more computer programs include instructions. When the instructions are executed by the device, the device is enabled to perform the method steps in embodiments of this application.

Specifically, in an embodiment of this application, the processor of the electronic device may be a system-on-a-chip SoC. The processor may include a central processing unit (Central Processing Unit, CPU), and may further include another type of processor, for example, a graphics processing unit (graphics processing unit, GPU). Specifically, in an embodiment of this application, the processor of the electronic device may be a PWM control chip.

Specifically, in an embodiment of this application, the processor may include, for example, a CPU, a DSP, a microcontroller, or a digital signal processor, and may further include a GPU, an embedded neural-network processing unit (Neural-network Processing Unit, NPU), and an image signal processor (Image Signal Processor, ISP). The processor may further include a necessary hardware accelerator or a logic processing hardware circuit, for example, an ASIC, or one or more integrated circuits configured to control program execution of the technical solutions in this application. In addition, the processor may have a function of operating one or more software programs. The software program may be stored in a storage medium.

Specifically, in an embodiment of this application, the memory of the electronic device may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any computer-readable medium that can be configured to carry or store expected program code in a form of instructions or a data structure and that can be accessed by a computer.

Specifically, in an embodiment of this application, the processor and the memory may be integrated into one processing apparatus, and more commonly, are components independent of each other. The processor is configured to execute program code stored in the memory to implement the method in embodiments of this application. In a specific implementation, the memory may alternatively be integrated into the processor, or independent of the processor.

Further, the device, apparatus, and module described in embodiments of this application may be specifically implemented by a computer chip or an entity, or may be implemented by a product having a specific function.

A person skilled in the art should understand that embodiments of this application may be provided as a method, an apparatus, or a computer program product. Therefore, the present invention may use a form of hardware only embodiments, software only embodiments, or embodiments with a combination of software and hardware. In addition, the present invention may use a form of a computer program product that is implemented on one or more computer-usable storage media that include computer-usable program code.

In several embodiments provided in this application, when any function is implemented in a form of software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps in the methods described in embodiments of this application.

Embodiments of this application are described with reference to the flowcharts and/or block diagrams of the method, the device (apparatus), and the computer program product according to embodiments of this application. It should be understood that computer program instructions may be used to implement each procedure and/or block in the flowcharts and/or the block diagrams and a combination of procedures and/or blocks in the flowcharts and/or the block diagrams. These computer program instructions may be provided to a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

Alternatively, these computer program instructions may be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Alternatively, these computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

It should be further noted that in embodiments of this application, "at least one" means one or more, and "a plurality of" means two or more. "And/Or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects. "At least one of the following" and a similar expression thereof mean any combination of these items, including a single item or any combination of a plurality of items. For example, at least one of a, b, and c may represent a, b, c, a and b, a and c, b and c, or a, b, and c, where a, b, and c may be singular or plural.

In embodiments of this application, the term "include", "comprise", or any other variants thereof is intended to cover a non-exclusive inclusion, so that a process, a method, a product, or a device that includes a list of elements not only includes those elements but also includes other elements that are not expressly listed, or further includes elements inherent to such a process, method, product, or device. Without more constraints, an element preceded by "includes a ..." does not preclude the presence of additional identical elements in the process, method, product, or device that includes the element.

This application may be described in the general context of computer-executable instructions, for example, a program module. Usually, the program module includes a routine, a program, an object, a component, a data structure, or the like for executing a specific task or implementing a specific abstract data type. This application may alternatively be practiced in distributed computing environments. In the distributed computing environments, tasks are executed by remote processing devices connected through a communication network. In the distributed computing environments, the program module may be located in both local and remote computer storage media including storage devices.

Embodiments of this application are described in a progressive manner. For same or similar parts in embodiments, refer to each other. Each embodiment focuses on differences from other embodiments. Particularly, the apparatus embodiment is basically similar to the method embodiment, and therefore is described briefly. For related parts, refer to partial descriptions in the method embodiment.

A person of ordinary skill in the art may be aware that the units and algorithm steps described in embodiments of this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for convenient and brief description, for a detailed working process of the foregoing apparatus and unit, refer to a corresponding process in the foregoing method embodiments. Details are not described herein again.

The foregoing descriptions are merely specific implementations of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A synchronous play system, wherein

   the play system comprises a first device, a second device, and a third device, and the third device is configured to: transmit a first data stream to the first device for play, and transmit a second data stream to the second device for play, wherein the first data stream and the second data stream are two data streams to be synchronously played, the first data stream comprises a plurality of first data frames, and the second data stream comprises a plurality of second data frames;
   the first device is configured to: obtain a first timestamp, and send the first timestamp to the third device;
   the third device is configured to: receive the first timestamp, and forward the first timestamp to the second device; and
   the second device is configured to: receive the first timestamp, read a second timestamp corresponding to a to-be-played second data frame, calculate a first play time difference based on at least the first timestamp and the second timestamp, and determine, based on the first play time difference, a synchronous play strategy to be executed for the to-be-played second data frame.

2. The system according to claim 1, wherein
   when performing the operation of reading the second timestamp corresponding to the to-be-played second data frame, the second device is specifically configured to:
   at a predetermined time interval, fetch a next to-be-played second data frame from a cache queue, and read a second timestamp.

3. The system according to claim 1, wherein
   when performing the operation of calculating the first play time difference based on at least the first timestamp and the second timestamp, the second device is specifically configured to: when it is determined that there is a mapping relationship between a next to-be-played second data frame and the $m^{th}$ first data frame, calculate the first play time difference based on at least a first timestamp corresponding to the $m^{th}$ first data frame and a second timestamp corresponding to the next to-be-played second data frame, wherein the mapping relationship is determined based on a sequence number and/or a presentation timestamp, PTS.

4. The system according to any one of claims 1 to 3, wherein

the second device is further configured to: identify data type information of the to-be-played second data frame, and feed back the data type information to the third device;
the first device is further configured to: identify data type information of a to-be-played first data frame, and feed back the data type information to the third device; and
the third device is further configured to: receive the data type information fed back by each of the first device and the second device, and determine a synchronization management strategy.

5. A synchronous play method, wherein

the method is applied to a second device, the second device is configured to: receive a second data stream sent by a third device, and play the second data stream, and the third device is further configured to transmit a first data stream to a first device for play, wherein the first data stream and the second data stream are two data streams to be synchronously played, the first data stream comprises a plurality of first data frames, and the second data stream comprises a plurality of second data frames; and
the method comprises:

receiving a first timestamp, wherein the first timestamp represents an actual play time of an $m^{th}$ first data frame on the first device, and m is greater than or equal to 1 and is an integer;
reading a second timestamp corresponding to a to-be-played second data frame, wherein the second timestamp represents a play time sequence of each second data frame in the second data stream;
calculating a first play time difference based on at least the first timestamp and the second timestamp; and
determining, based on the first play time difference, a synchronous play strategy to be executed for the to-be-played second data frame.

6. The method according to claim 5, wherein receiving the first timestamp comprises:

receiving the first timestamp forwarded by the third device, wherein the first timestamp is generated by the first device and sent to the third device.

7. The method according to claim 5, wherein reading the second timestamp corresponding to the to-be-played second data frame comprises:
at a predetermined time interval, fetching a next to-be-played second data frame from a cache queue, and reading a second timestamp.

8. The method according to any one of claims 5 to 7, wherein
calculating the first play time difference based on at least the first timestamp and the second timestamp comprises:
when it is determined that there is a mapping relationship between the next to-be-played second data frame and the $m^{th}$ first data frame, calculating the first play time difference based on at least the first timestamp corresponding to the $m^{th}$ first data frame and the second timestamp corresponding to the next to-be-played second data frame, wherein the mapping relationship is determined based on a sequence number and/or a presentation timestamp PTS.

9. The method according to any one of claims 5 to 7, wherein
calculating the first play time difference based on at least the first timestamp and the second timestamp comprises:

calculating the first play time difference based on the first timestamp, the second timestamp, first processing duration, and second processing duration, wherein
the first processing duration is an estimated value of processing duration occupied from fetching one first data frame from the cache queue to playing the first data frame, and the second processing duration is an estimated value of processing duration occupied from fetching one second data frame from the cache queue to playing the second data frame.

10. The method according to any one of claims 5 to 9, wherein

the synchronous play strategy comprises at least one of waiting, sending for display, and catching up; and
determining, based on the first play time difference, the synchronous play strategy to be executed for the to-be-played second data frame comprises:

comparing the first play time difference with a predetermined first threshold interval; and

when the first play time difference is less than a minimum value of the first threshold interval, determining that play of the first data stream is behind that of the second data stream, and determining that the synchronous play strategy to be executed for the to-be-played second data frame is waiting; or

when the first play time difference is greater than a maximum value of the first threshold interval, determining that play of the first data stream is ahead of that of the second data stream, and determining that the synchronous play strategy to be executed for the to-be-played second data frame is catching up; or

when the first play time difference is within the first threshold interval, determining that play of the first data stream is synchronous with that of the second data stream, and determining that the synchronous play strategy to be executed for the to-be-played second data frame is sending for display.

11. A synchronous play method, wherein

the method is applied to a third device, and the third device is configured to: transmit a first data stream to a first device for play, and transmit a second data stream to a second device for play, wherein the first data stream and the second data stream are two data streams to be synchronously played, the first data stream comprises a plurality of first data frames, and the second data stream comprises a plurality of second data frames; and
the method comprises:

receiving delay information, wherein the delay information comprises a transmission delay and a decoding delay, the transmission delay represents duration for transmitting an $m^{th}$ first data frame from the third device to the first device, the decoding delay is decoding duration occupied for the $m^{th}$ first data frame, and m is greater than or equal to 1 and is an integer;
obtaining a sending time of the $m^{th}$ first data frame;
obtaining an estimated value of a play time of the $m^{th}$ first data frame on the first device based on at least the sending time and the delay information; and
before sending a second data frame, adding the estimated value as a fifth timestamp to the second data frame, wherein the fifth timestamp is used to calculate a difference from a current moment to obtain a second play time difference, so as to determine a synchronous play strategy to be executed for the to-be-played second data frame.

12. The method according to claim 11, wherein obtaining the estimated value of the play time of the first data frame on the first device based on at least the sending time and the delay information comprises:

obtaining the estimated value of the play time of the $m^{th}$ first data frame on the first device based on at least the sending time of the $m^{th}$ first data frame and the delay information; and
adding the estimated value as the fifth timestamp to the second data frame comprises:
adding the estimated value as the fifth timestamp to a second data frame that has a mapping relationship with the $m^{th}$ first data frame, wherein the mapping relationship is determined based on a sequence number and/or a presentation timestamp PTS.

13. The method according to claim 11 or 12, wherein obtaining the estimated value of the play time of the first data frame on the first device based on at least the sending time and the delay information comprises:

obtaining the estimated value of the play time of the first data frame on the first device based on the sending time, the delay information, a third timestamp, and a fourth timestamp, wherein the third timestamp is a presentation timestamp PTS added for the first data frame, and represents a play time sequence of each first data frame in the first data stream; and
the fourth timestamp is a presentation timestamp PTS added for the second data frame, and represents a play time sequence of each second data frame in the second data stream.

14. A synchronous play method, wherein

the method is applied to a sixth device, and the sixth device is configured to: receive a fourth data stream sent by a fourth device and a fifth data stream sent by a fifth device, and synchronously play the fourth data stream and the fifth data stream; and
the method comprises:

receiving synchronization group information sent by each of the fourth device and the fifth device, wherein the synchronization group information comprises synchronization reference information and stream information, the synchronization reference information comprises identity information of a device at a source end and identity information of a device at a play end, and the stream information comprises data type information of a data stream sent by each device at the source end; and

determining a synchronous play strategy for a to-be-played data stream based on at least the synchronization group information.

15. An electronic device, wherein the electronic device comprises:

one or more processors, a memory, at least one application, and one or more computer programs, wherein the one or more computer programs are stored in the memory, the one or more computer programs comprise instructions, and when the instructions are executed by the electronic device, the electronic device is enabled to perform the method according to any one of claims 5 to 14.

16. A storage medium, comprising computer instructions, wherein when the computer instructions are run on an electronic device, the electronic device is enabled to perform the method according to any one of claims 5 to 14.

17. A chip system, comprising:

a communication interface, configured to input and/or output data; and
a processor, configured to execute a computer-executable program, to enable a device in which the chip system is installed to perform the method according to any one of claims 5 to 14.

FIG. 1

FIG. 2

Electronic device 300

FIG. 3

Sound

Device B

Device A

Device C

Image

FIG. 4(a)

Device B

Sound

Device A

Image

Device C

Image

Device D

FIG. 4(b)

Left channel

Device B

Right
channel

Device C

Device A

Device D

Image

Device E

Image

FIG. 4(c)

Device B

Image

Device A

Image

Device C

FIG. 4(d)

FIG. 4(e)

FIG. 5(a)

EP 4 694 146 A1

FIG. 5(b)

FIG. 5(c)

39

510

511

509

(Left channel)

(Right channel)

(Video)

512

FIG. 5(d)

Device B

Image

Device A

Device C

Sound

FIG. 6(a)

Device B

Image

Device A

Device C

Image

FIG. 6(b)

Device B

Sound

Device A

Device C

Sound

FIG. 6(c)

FIG. 7

FIG. 8

FIG. 9

FIG. 10

FIG. 11

FIG. 12

EP 4 694 146 A1

FIG. 13

```
┌─────────────────────────────┐          ┌─────────────────────────────┐
│        Source end           │ First    │         Play end            │
│                             │ data     │   ┌─────────────────────┐   │
│                             │ stream   │   │    First device     │   │
│   ┌─────────────────┐       │      ──→ │   └─────────────────────┘   │
│   │   Third device  │───────┼──┐       │                             │
│   └─────────────────┘       │  └───────┼──→┌─────────────────────┐   │
│                             │          │   │   Second device     │   │
│                             │ First    │   └─────────────────────┘   │
│                             │ data     │                             │
│                             │ stream   │                             │
└─────────────────────────────┘          └─────────────────────────────┘
```

FIG. 14

```
┌─────────────────────────────┐ S141    ┌─────────────────────────────┐ S142
│                             │         │   Read a second timestamp   │
│   Receive a first timestamp │         │ corresponding to a to-be-   │
│                             │         │    played second data frame │
└──────────────┬──────────────┘         └──────────────┬──────────────┘
               │                                        │
               └──────────────────┬─────────────────────┘
                                  ↓
            ┌───────────────────────────────────────────┐ S143
            │ Calculate a first play time difference     │
            │ based on at least the first timestamp and  │
            │ the second timestamp                       │
            └───────────────────────┬───────────────────┘
                                    ↓
            ┌───────────────────────────────────────────┐ S144
            │ Determine, based on the first play time    │
            │ difference, a synchronous play strategy to │
            │ be executed for the to-be-played second    │
            │ data frame                                 │
            └───────────────────────────────────────────┘
```

FIG. 15

Receive delay information — S151

Obtain a sending time of an m$^{th}$ first data frame — S152

Obtain an estimated value of a play time of the m$^{th}$ first data frame on a first device based on at least the sending time and the delay information — S153

Before sending a second data frame, add the estimated value as a fifth timestamp to the second data frame — S154

FIG. 16

Read a fifth timestamp corresponding to a to-be-played second data frame — S161

Calculate a difference between the fifth timestamp and a current moment to obtain a second play time difference — S162

Determine, based on the second play time difference, a synchronous play strategy to be executed for the to-be-played second data frame — S163

FIG. 17

FIG. 18

| Receive synchronization group information sent by each of a fourth device and a fifth device | S181 |
| --- | --- |

| Determine a synchronous play strategy for a to-be-played data stream based on at least the synchronization group information | S182 |
| --- | --- |

FIG. 19

FIG. 20

## INTERNATIONAL SEARCH REPORT

| International application No. |
|---|
| **PCT/CN2024/095705** |

| A. | CLASSIFICATION OF SUBJECT MATTER |
|---|---|

H04N21/43(2011.01)i

According to International Patent Classification (IPC) or to both national classification and IPC

| B. | FIELDS SEARCHED |
|---|---|

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS: CNTXT; VEN; USTXT; JPTXT; WOTXT; EPTXT; CNKI; IEEE: 视频, 音频, 同步, 时间戳, 分布式, 不同, 时延, 延时, 类型, 传输, 解码, 源设备, video, audio, synchronization, PTS, presentation time stamp, distribute, different, delay, type, transmission, transmit, decode, source

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 105721920 A (CHINA MOBILE COMMUNICATIONS CORP.) 29 June 2016 (2016-06-29)<br>description, paragraphs 70-185, and figures 1-4 | 1-10, 15-17 |
| Y | CN 105721920 A (CHINA MOBILE COMMUNICATIONS CORP.) 29 June 2016 (2016-06-29)<br>description, paragraphs 70-185, and figures 1-4 | 11-13, 15-17 |
| X | CN 114286149 A (GUANGDONG BOHUA UHD INNOVATION CENTER CO., LTD.) 05 April 2022 (2022-04-05)<br>description, paragraphs 6-46, and figures 1-2 | 1-10, 15-17 |
| Y | CN 114286149 A (GUANGDONG BOHUA UHD INNOVATION CENTER CO., LTD.) 05 April 2022 (2022-04-05)<br>description, paragraphs 6-46, and figures 1-2 | 11-13, 15-17 |
| Y | CN 111954051 A (HUAWEI TECHNOLOGIES CO., LTD.) 17 November 2020 (2020-11-17)<br>description, paragraphs 96-180, and figures 1-8 | 11-13, 15-17 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 August 2024** | **19 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/095705**

### C.    DOCUMENTS CONSIDERED TO BE RELEVANT

| Category* | Citation of document, with indication, where appropriate, of the relevant passages | Relevant to claim No. |
|---|---|---|
| Y | CN 113273221 A (FRAUNHOFER-GESELLSCHAFT ZUR FÖRDERUNG DER ANGEWANDTEN FORSCHUNG E.V.) 17 August 2021 (2021-08-17) description, paragraphs 92-175, and figures 1-3 | 11-13, 15-17 |
| X | CN 115250373 A (BEIJING SUIRUI HUIJIAN TECHNOLOGY CO., LTD. et al.) 28 October 2022 (2022-10-28) description, paragraphs 23-49, and figures 1-4 | 14-17 |
| A | CN 107801080 A (TP-LINK TECHNOLOGIES CO., LTD.) 13 March 2018 (2018-03-13) entire document | 1-17 |
| A | US 2017111680 A1 (IBM) 20 April 2017 (2017-04-20) entire document | 1-17 |

Form PCT/ISA/210 (second sheet) (July 2022)

**INTERNATIONAL SEARCH REPORT**
Information on patent family members

International application No.

**PCT/CN2024/095705**

| Patent document cited in search report | | | Publication date (day/month/year) | Patent family member(s) | | | Publication date (day/month/year) |
|---|---|---|---|---|---|---|---|
| CN | 105721920 | A | 29 June 2016 | CN | 105721920 | B | 02 April 2019 |
| CN | 114286149 | A | 05 April 2022 | CN | 114286149 | B | 07 July 2023 |
| CN | 111954051 | A | 17 November 2020 | CN | 111954051 | B | 26 October 2021 |
| | | | | WO | 2021159864 | A1 | 19 August 2021 |
| CN | 113273221 | A | 17 August 2021 | US | 2021243491 | A1 | 05 August 2021 |
| | | | | US | 11962833 | B2 | 16 April 2024 |
| | | | | EP | 3871422 | A1 | 01 September 2021 |
| | | | | MX | 2021004635 | A | 02 July 2021 |
| | | | | KR | 20210080476 | A | 30 June 2021 |
| | | | | KR | 102570237 | B1 | 24 August 2023 |
| | | | | WO | 2020084095 | A1 | 30 April 2020 |
| | | | | JP | 2022511406 | A | 31 January 2022 |
| | | | | JP | 7278373 | B2 | 19 May 2023 |
| | | | | BR | 112021007803 | A2 | 27 July 2021 |
| | | | | CA | 3118044 | A1 | 30 April 2020 |
| | | | | CA | 3118044 | C | 18 June 2024 |
| CN | 115250373 | A | 28 October 2022 | None | | | |
| CN | 107801080 | A | 13 March 2018 | None | | | |
| US | 2017111680 | A1 | 20 April 2017 | US | 9979997 | B2 | 22 May 2018 |

Form PCT/ISA/210 (patent family annex) (July 2022)

**EP 4 694 146 A1**

**Patent documents cited in the description**

- CN 202310838662